# EUROPEAN PATENT SPECIFICATION

(11) **EP 3 887 613 B1**
(45) Date of publication and mention of the grant of the patent: **25.11.2026**
(21) Application number: 19888313.4
(22) Date of filing: 27.11.2019
(51) Int. Cl.: E04B 1/19, B21D 47/00, B32B 3/12, E04C 3/04, E04C 5/06

(54) **STRUCTURAL DESIGN PRINCIPLES FOR DIAGONAL BRACINGS IN TRUSS AND BEAM SUPPORT SYSTEMS**
KONSTRUKTIONSPRINZIPIEN FÜR DIAGONALVERSTREBUNGEN IN FACHWERK- UND TRÄGERSYSTEMEN
PRINCIPES DE CONCEPTION STRUCTURELLE POUR ENTRETOISES DIAGONALES DANS DES SYSTÈMES DE SUPPORT DE POUTRE ET DE FERME

(30) Priority: 28.11.2018 US 201862772174 P
(43) Date of publication of application: 06.10.2021
(73) Proprietor: President And Fellows Of Harvard College, Cambridge, Massachusetts 02138 (US)
(72) Inventor: BERTOLDI, Katia, Cambridge, Massachusetts 02139 (US); FERNANDES, Matheus C., Arlington, Massachusetts 02474 (US); WEAVER, James C., Cambridge, Massachusetts 02140 (US)
(74) Representative: Guardian IP Consulting I/S
(86) International application number: PCT/US2019/063794
(87) International publication number: WO 2020/113133

(56) References cited:
- WO-A1-90/10762
- JP-A- 2002 047 730
- US-A- 4 584 810
- US-A1- 2006 032 178
- US-A1- 2016 027 425
- US-B1- 9 162 416
- US-B1- 9 162 416

## Description

### CROSS-REFERENCE TO RELATED APPLICATIONS

This application claims priority to and benefit of U.S. Provisional Patent Application Serial No. 62/772,174, filed on November 28, 2018.

### STATEMENT REGARDING FEDERALLY SPONSORED RESEARCH

Some aspects of the present disclosure were made with government support, under NSF Grant No. DGE-1144152 and NSF Grant No. DRMEF-1533985 awarded by the National Science Foundation (NSF), and the government shares rights to such aspects of the present disclosure.

### FIELD OF THE INVENTION

The present invention relates generally to a structural element, and, more particularly, to a diagonal bracing in beam and truss support systems.

### BACKGROUND OF THE INVENTION

Structural bracings are typically used in beam and truss support systems commonly employed in buildings, bridges, aerospace applications, automotive applications, and power-transmission application. Additionally, structural bracings are further used in numerous other macro-scale and micro-scale examples."

For example, dating back to the 1800s, architects Ithiel Town and Colonel Long introduced complementary and simple designs for diagonal bracings in square grid lattices. Although simple, these early designs have historically proven to be effective in supporting beam structures. Based on that early success, there has been very limited research and little deviation from these old designs in modern engineering structures. As a great disadvantage, in present days the load-carrying capacity of these old designs has reached its limits. Thus, for example, weight presently limits strength and/or height of structures. In another example, weight limits lengths of structures without support, in applications such as bridges.

Thus, there is a need for providing a structural element that increases strength without increasing weight, and that prevents or reduces the above and other problems.

JP 2002 047730 A discloses a roof structure constituted by taking a unit with the tense-grid structure as a base unit, both end parts of the roof in a span direction are supported by a girder in a longitudinal direction, the units are disposed consecutively in the span direction at both end parts of the roof in the longitudinal direction, and a chord member in the span direction is tightly stretched between bundle members 13 composed of the units. In the unit 11 having the deformed tense-grid structure, two pieces of the grid material 12 are intersected with each other in the shape of a cross, and a diagonal member 14 is tightly stretched between both of the upper and lower ends of the bundle member 13 installed in an intersected part and the respective ends of the two pieces of the grid material 12. The units 11 are used and coupled together by means of band members 15 disposed consecutively and stretched tightly in a lattice like manner, and the chord member for coupling the bundle members 13 together is installed in an place requiring the chord member.

### SUMMARY OF THE INVENTION

According to the invention, a structural lattice includes a rectangular base defined by four periphery beams, and two non-diagonal beams that divide the rectangular base in four quadrants. The structural lattice further includes a diagonal reinforcement strut system overlaid on the rectangular base and having at least two intersecting sets of diagonal beams forming an open-and-closed cell architecture.

According to the invention, one of the two intersecting sets of diagonal beams is a first set of diagonal beams, which includes first beam that is parallel to a second beam. According to to the invention, another one of the two intersecting sets of diagonal beams is a second set of diagonal beams, the second set of diagonal beams including a respective first beam that is parallel to a respective second beam. According to one example of this configuration, the first set of diagonal beams intersects the second set of diagonal beams at a perpendicular angle. According to the invention, the first beam and the second beam of the first set of diagonal beams are symmetrically positioned over a same one of the four quadrants as the respective first beam and the respective second beam of the second set of diagonal beams.

According to yet another implementation of this embodiment, the rectangular base and the diagonal reinforcement strut system form at least a structural portion of a building, a bridge, an aerospace structure, an automotive structure, or a power transmission structure. According to yet another implementation of this embodiment, the diagonal reinforcement strut system is welded to the rectangular base. According to another configuration of this implementation, the four periphery beams have a square cross-section.

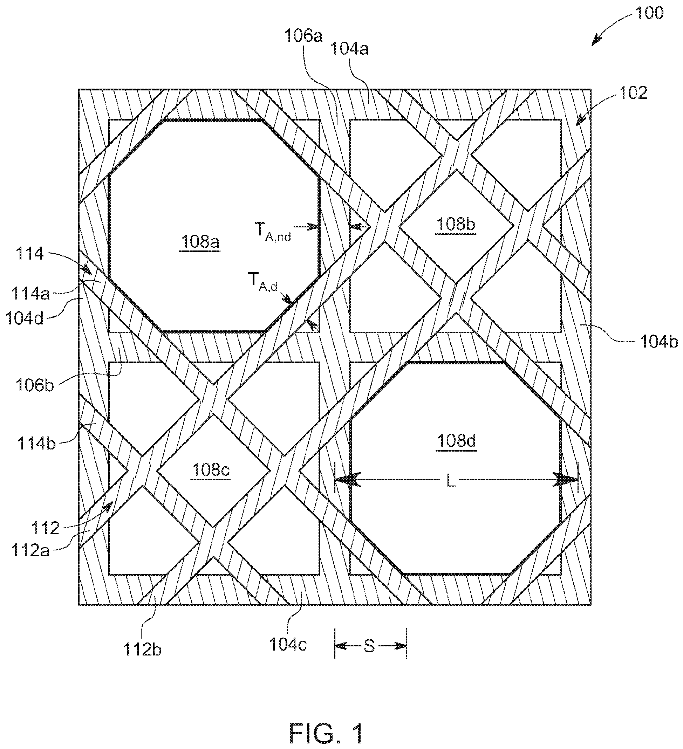

Additional aspects of the invention will be apparent to those of ordinary skill in the art in view of the detailed description of various embodiments, which is made with reference to the drawings, a brief description of which is provided below. Fig 1, 12B, 12C, 12D, 12 E, 22B, 22D, 22F, 22H, 23A, 23B, 23C, 23D, 23E, 23F, 23G, 23H, 23I shows embodiments of the invention. The rest of the figures show other matters related hereto

### BRIEF DESCRIPTION OF THE DRAWINGS

FIG. 1 shows a planar idealization of a Design A structure.
FIG. 2A shows another illustration of a Design A of a lattice structure.
FIG. 2B shows a Design B of a lattice structure.
FIG. 2C shows a Design C of a lattice structure.
FIG. 2D shows a Design D of a lattice structure.
FIG. 2E shows an experimental setup (top row) and deformations (bottom row) for the different Designs A-D illustrated in FIGs. 2A-2D.
FIG. 2F shows a chart with results from experiments using the experimental setup illustrated in FIG. 2E, as well as numerical finite element simulations.
FIG. 3A shows a chart with structural stiffness as a function of loading angle for different designs.
FIG. 3B shows a chart with effective buckling stress as a function of loading angle for different designs.
FIG. 3C shows a buckling mode for Design A at an angle of 0 degrees.
FIG. 3D shows a buckling mode for Design B at an angle of 0 degrees.
FIG. 3E shows a buckling mode for Design C at an angle of 0 degrees.
FIG. 3F shows a buckling mode for Design D at an angle of 0 degrees.
FIG. 4A shows a chart with an optimal value of critical buckling load for a varying number of diagonals.
FIG. 4B shows a chart with experimental stress-strain curves for 3 independently tested samples of Design A, Optimum Design, and respective simulations.
FIG. 5A shows experimental deformation from 3-point bending applied in each of Designs A-D.
FIG. 5B shows a chart with results from an experimental reaction force vs. an applied displacement with simulations results overlaid.
FIG. 6A shows dimensions for Design A in a circular cross-section configuration.
FIG. 6B shows dimensions for Design A in a rectangular cross-section configuration.
FIG. 7A shows dimensions for Design C in a circular cross-section configuration.
FIG. 7B shows dimensions for Design C in a rectangular cross-section configuration.
FIG. 8 is a table that shows three-dimensional ("3D") printed samples caliper measurements.
FIG. 9 is a table that shows 3D printed samples expected values.
FIG. 10A shows Design A simulation deformation overlaid with respective experimental results.
FIG. 10B shows Design B simulation deformation overlaid with respective experimental results.
FIG. 10C shows Design C simulation deformation overlaid with respective experimental results.
FIG. 10D shows Design D simulation deformation overlaid with respective experimental results.
FIG. 11A shows a chart with normalized critical effective buckling stress for a 3x3 representative-volume element ("RVE") finite size structure including a region of first 6 critical modes.
FIG. 11B shows a chart with normalized critical effective buckling stress for a 10x10 RVE finite size structure including a region of first 6 critical modes.
FIG. 12A shows a structure with 1 diagonal and no separation parameter.
FIG. 12B shows the structure of FIG. 12A with 2 diagonals with one separation parameter given by Si.
FIG. 12C shows the structure of FIG. 12A with 3 diagonals with one separation parameter S₂.
FIG. 12D shows the structure of FIG. 12A with 4 diagonals and 2 diagonal separation parameters S₁, S₂.
FIG. 12E shows the structure of FIG. 12A with 5 diagonals and 2 separation parameters S₂, S₃.
FIG. 13 is a table that shows finite structure buckling load optimization optimum parameters.
FIG. 14 is a table that shows infinite structure buckling load optimization optimum parameters.
FIG. 15A shows an optimal value of critical buckling load for a varying number of diagonals for an infinite structure.
FIG. 15B shows resulting deformed geometries for optimal infinite designs, illustrated in FIG. 15A, including geometries from one to four diagonals.
FIG. 16A is a chart that shows a critical buckling strain for varying spacing between diagonals and select loading angles.
FIG. 16B is a chart that shows the normalized structural linear elastic effective stiffness of the geometry as the mass ratio λ is varied for select loading angles.
FIG. 16C is a chart that shows the critical buckling strain of the geometry as a mass ratio λ is varied for select loading angles.
FIG. 17A is a chart that shows normalized linear elastic effective stiffness for different designs as a result of a varying loading angle for a structure with circular cross-section.
FIG. 17B is a chart that shows a critical buckling strain for the varying loading angle of FIG. 17A for a structure with circular cross-section.
FIG. 17C is a chart that shows results of a nonlinear simulation with circular cross-section for a finite size structure matching that of an experimental setup as in FIG. 2E.
FIG. 18A is a chart that shows a critical buckling strain for varying spacing between diagonals for a circular cross-section geometry for select loading angles.
FIG. 18B is a chart that shows the normalized effective structural stiffness of the circular cross-section geometry of FIG. 18A, as the mass ratio λ is varied for select loading angles.
FIG. 18C is a chart that shows a critical buckling strain of the circular cross-section geometry of FIG. 18A, as the mass ratio λ is varied for select loading angles.
FIG. 19A shows a chart with simulation results for a 3-point bend test.
FIG. 19B shows a schematic illustrating deformation of each geometry at the displacement provided at the end of the plot illustrated in FIG. 19A.
FIG. 19C shows simulation results of a distributed load test.
FIG. 19D shows a schematic illustrating deformation of each geometry at the displacement provided at the end of the plot illustrated in FIG. 19C.
FIG. 20A shows a chart with simulation results for a simple cantilever beam point bend test.
FIG. 20B shows a schematic illustrating deformation of each geometry at a displacement provided at the end of the plot illustrated in FIG. 20A.
FIG. 20C shows a chart with simulation results of a distributed load cantilever beam test.
FIG. 20D shows a schematic illustrating deformation of each geometry at a displacement provided at the end of the plot illustrated in FIG. 20C.
FIG. 21A shows a chart with simulation results for a simple slender structure compression test.
FIG. 21B shows a schematic illustrating deformation of each geometry at a displacement provided at the end of the plot illustrated in FIG. 21A.
FIG. 21C shows a chart with plot quantitative results of a distributed load throughout every level of the structure associated with FIG. 21B.
FIG. 21D shows a schematic illustrating deformation of each geometry at a displacement provided at the end of the plot illustrated in FIG. 21C.
FIG. 22A is a schematic illustrating a first instance of a diagonal spacing variance surveyed during an optimization for a lattice design.
FIG. 22B is a schematic illustrating a second instance of a diagonal spacing variance surveyed during the optimization of the lattice design of FIG. 22A.
FIG. 22C is a schematic illustrating a third instance of a diagonal spacing variance surveyed during the optimization of the lattice design of FIG. 22A.
FIG. 22D is a schematic illustrating a fourth instance of a diagonal spacing variance surveyed during the optimization of the lattice design of FIG. 22A.
FIG. 22E is a schematic illustrating a fifth instance of a diagonal spacing variance surveyed during the optimization of the lattice design of FIG. 22A.
FIG. 22F is a schematic illustrating a sixth instance of a diagonal spacing variance surveyed during the optimization of the lattice design of FIG. 22A.
FIG. 22G is a schematic illustrating a seventh instance of a diagonal spacing variance surveyed during the optimization of the lattice design of FIG. 22A.
FIG. 22H is a schematic illustrating an eighth instance of a diagonal spacing variance surveyed during the optimization of the lattice design of FIG. 22A.
FIG. 22I is a schematic illustrating a ninth instance of a diagonal spacing variance surveyed during the optimization of the lattice design of FIG. 22A.
FIG. 23A is a schematic illustrating a first instance of a mass ratio variance surveyed during the optimization of the lattice design of FIG. 22A.
FIG. 23B is a schematic illustrating a second instance of a mass ratio variance surveyed during the optimization of the lattice design of FIG. 22A.
FIG. 23C is a schematic illustrating a third instance of a mass ratio variance surveyed during the optimization of the lattice design of FIG. 22A.
FIG. 23D is a schematic illustrating a fourth instance of a mass ratio variance surveyed during the optimization of the lattice design of FIG. 22A.
FIG. 23E is a schematic illustrating a fifth instance of a mass ratio variance surveyed during the optimization of the lattice design of FIG. 22A.
FIG. 23F is a schematic illustrating a sixth instance of a mass ratio variance surveyed during the optimization of the lattice design of FIG. 22A.
FIG. 23G is a schematic illustrating a seventh instance of a mass ratio variance surveyed during the optimization of the lattice design of FIG. 22A.
FIG. 23H is a schematic illustrating an eighth instance of a mass ratio variance surveyed during the optimization of the lattice design of FIG. 22A.
FIG. 23I is a schematic illustrating a ninth instance of a mass ratio variance surveyed during the optimization of the lattice design of FIG. 22A.
FIG. 24A is a schematic showing a first compression of a first lattice design.
FIG. 24B is a schematic showing a second compression of the first lattice design of FIG. 24A.
FIG. 24C is a schematic showing a third compression of the first lattice design of FIG. 24A.
FIG. 25A is a schematic showing a first compression of a second lattice design.
FIG. 25B is a schematic showing a second compression of the second lattice design of FIG. 25A.
FIG. 25C is a schematic showing a third compression of the second lattice design of FIG. 25A.
FIG. 26A is a schematic showing a first compression of a third lattice design.
FIG. 26B is a schematic showing a second compression of the third lattice design of FIG. 26A.
FIG. 26C is a schematic showing a third compression of the third lattice design of FIG. 26A.
FIG. 27A is a schematic showing a first compression of a fourth lattice design.
FIG. 27B is a schematic showing a second compression of the fourth lattice design of FIG. 27A.
FIG. 27C is a schematic showing a third compression of the fourth lattice design of FIG. 27A.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the scope of the invention as defined by the appended claims.

### DETAILED DESCRIPTION

While this invention is susceptible of embodiment in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated. For purposes of the present detailed description, the singular includes the plural and vice versa (unless specifically disclaimed); the words "and" and "or" shall be both conjunctive and disjunctive; the word "all" means "any and all"; the word "any" means "any and all"; and the word "including" means "including without limitation."

Referring to FIG. 1, a planar idealization illustrates a periodic structural lattice 100 that has a base square-grid 102 defined by four periphery beams 104a-104d, which form a peripheral edge of the structural lattice 100. The base square-grid 102 further has two non-diagonal beams 106a, 106b that intersect each other perpendicularly at midpoints of respective periphery beams 104a-104d such that the base square-grid 102 has four open base-cells 108a-108d. In this example, the open base-cells 108a-108d are square shaped and are equal to each other. The non-diagonal beams 106a, 106b have a non-diagonal thickness T_{A,nd} and the open base-cells 108a-108d each have a cell length L. According to one example, the non-diagonal beams 106a, 106b are reinforcing struts having a first volume material, and are part of a structural portion, such as a building, a bridge, a crane, an aerospace structure, an automotive structure, or a power transmission structure. For clarity, the four periphery beams 104a-104d are also considered to be non-diagonal beams.

Structurally, the base square-grid 102 is overlaid with a diagonal reinforcement strut system 110, which includes at least two intersecting sets of diagonal beams 112, 114 forming an open-and-closed cell checkerboard-like architecture. A first set of diagonal beams 112 has a pair of parallel beams that includes a first beam 112a and a second beam 112b. A second set of diagonal beams 114 has a respective pair of parallel beams that include a first beam 114a and a second beam 114b. Each diagonal beam 112, 114 has a diagonal thickness T_{A,d} and is spaced at a diagonal spacing S.

The design of the structural lattice 100 is a new, more material-efficient design, for diagonal bracings in beam and truss support systems commonly employed in buildings, bridges, aerospace, automotive, cranes, and power transmission applications. In addition, other applications of the structural lattice 100 include numerous other macro-scale and micro-scale examples, as at least some advantages of the present disclosure are independent of the selection of material or scale of respective structure.

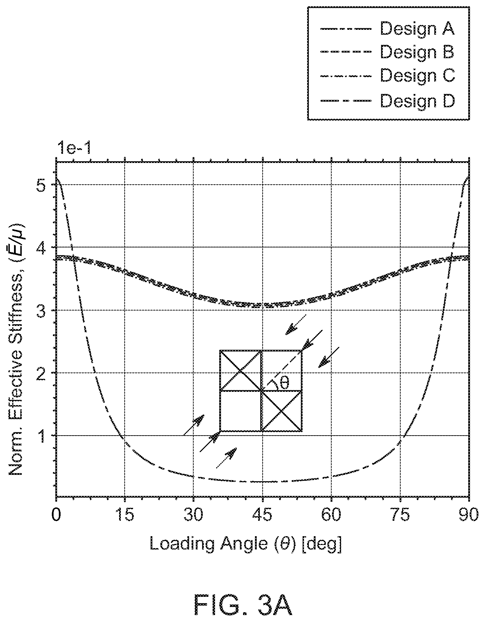

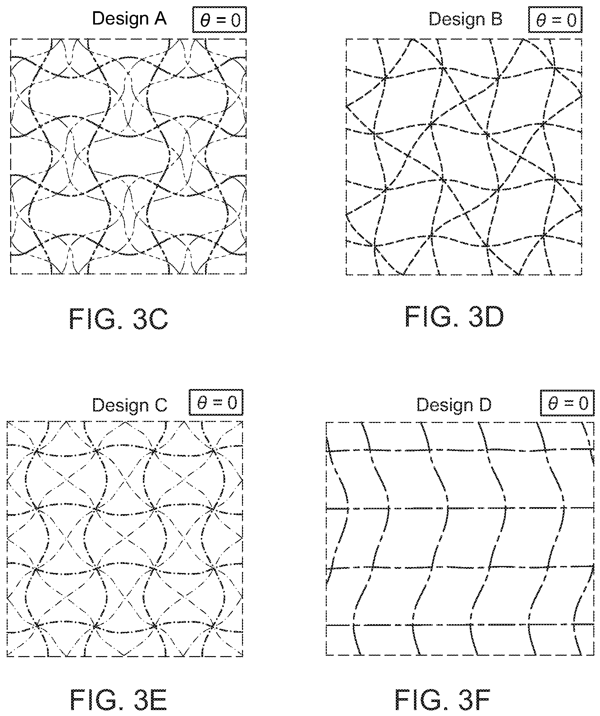

With the implementation of this new design, the respective structure's strength (through buckling resistance) is increased by approximately 30% over currently used engineering designs. In addition to theoretical and numerical simulation, the disclosure below describes constructed designs that were mechanically evaluated to demonstrate significant advantages over their traditionally used engineering counterparts (for example, as illustrated in FIGs. 3A-3F).

The structural lattice 100 introduces a double diagonal support system in which the alignment of S/L (diagonal spacing/cell length) is such that all lengths of the beams 106, 108 create an equilateral octagon for the squares 108a, 108d that do not contain diagonal beams. Although some of the examples described below illustrate the thickness of the diagonals T_{A,d} being half of the thickness of the non-diagonals T_{A,nd}, the thicknesses illustrate only one example of the mass allocation possible for the disclosed lattice design.

The structural lattice 100 is beneficial at least because, while only slightly increasing design complexity, it obtains a stronger and more robust lattice structure while using the same volume of material. One exemplary application for the structural lattice 100 is to build taller, more slender structures, such as high-rise buildings. In this application, the weight of the support structure is typically a limiting factor as how tall a high-rise can be built. Re-allocating the mass of the structural lattice 100, the same amount of material used in typical engineering now provide a significantly higher strength using the design principles of this disclosure.

The design configurations of this disclosure for the structural lattice 100 are generally advantageous over previous design configuration, and would have been considered counterintuitive in accordance with previous design thought for several reasons. For example, according to previous design configurations, the structural lattice 100 would have been considered to contain additional material, and, thus, would not have been considered to be economically advantageous. As such, the previous design configuration would have allocated additional material to existing truss elements. In contrast to the previous design configurations and previous design thought, advantageously, the structural lattice 100 does not contain additional material and is economically advantageous.

According to another example of a previous design configuration, it has been previously widely accepted that triangular lattices provide a strong mechanism for stability. In contrast to previous triangular lattices, advantageously, the structural lattice 100 designs of the present disclosure include non-triangular elements (thus, rendering the presently disclosed designs as undesirable based on previous design thought).

According to yet another example of a previous design configuration, very little attention has been devoted to buckling strength of lattices. Much of previous constriction code is kept well under the buckling strength of a design. Instead, a lot of attention has been previously devoted to the stiffness of a structure. In addition to focusing on stiffness, advantageously, the present disclosure focuses on the buckling strength of a design.

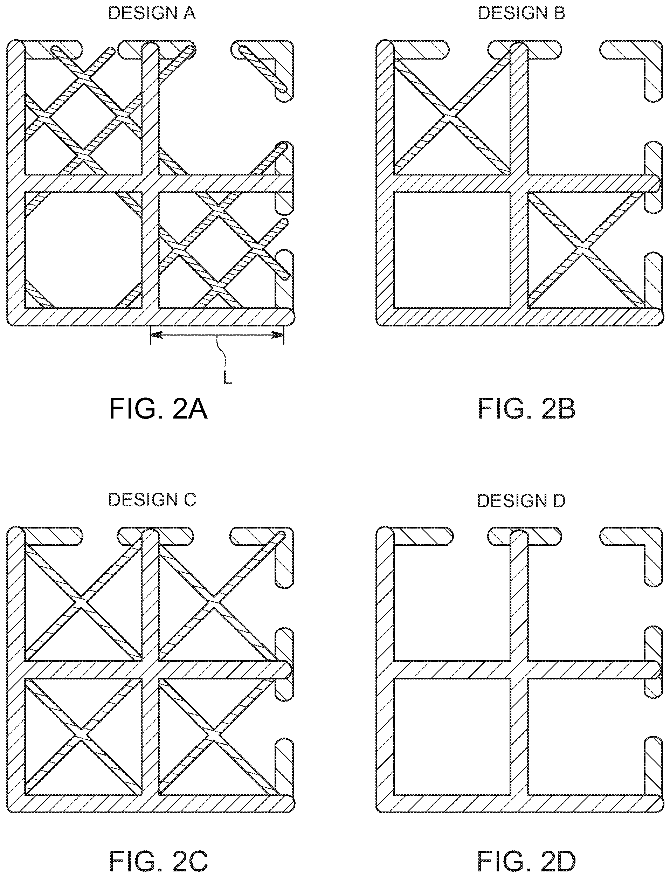

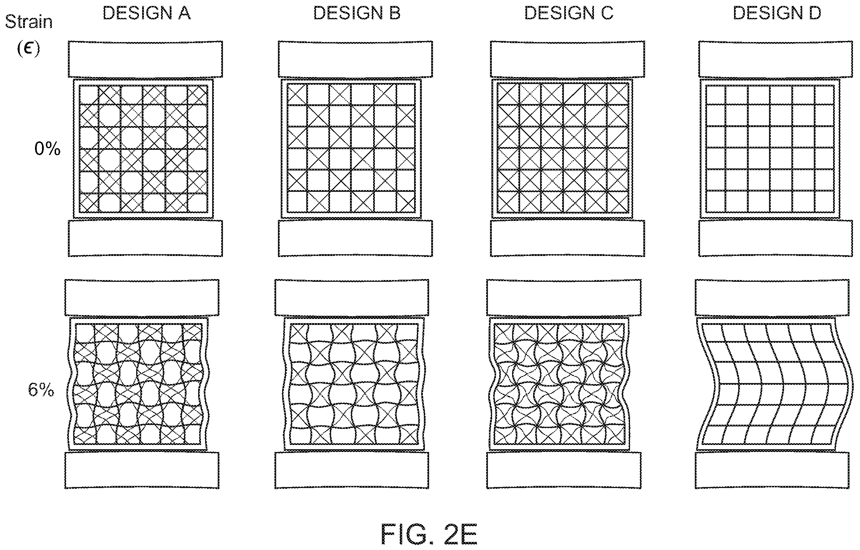

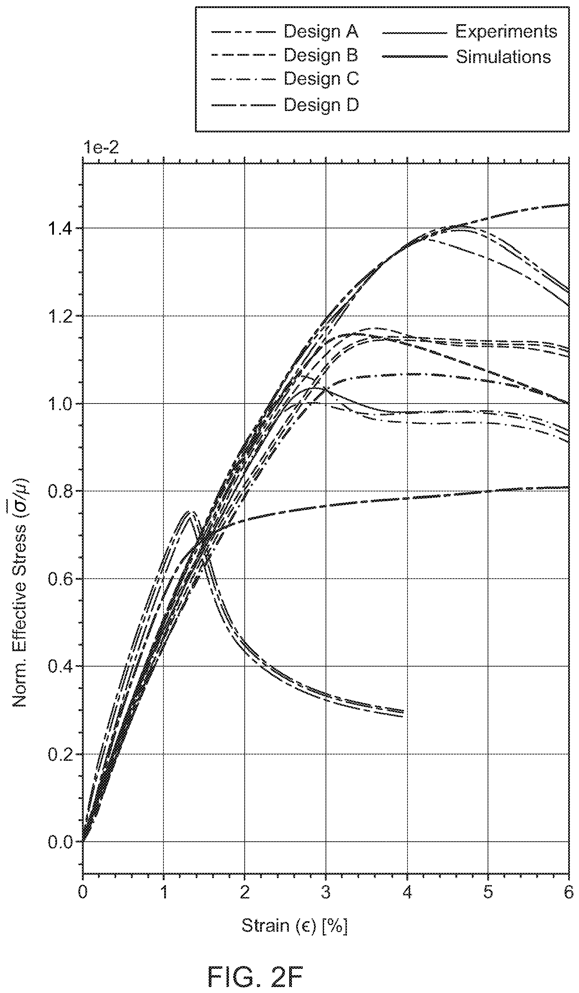

Referring generally to FIGs. 2A-2F, different designs A-D are considered in the analysis disclosed below. Each of the designs A-D illustrated in FIGs. 2A-2D are variations based on the structural lattice 100 described above. Referring to FIG. 2E, an experimental setup shows 0% applied strain (top row) and 6% applied strain (bottom row) to a representative model for each of the four designs A-D. Referring to FIG. 2F, experimental (solid lines) stress-strain curves for 3 independently tested samples of each design are shown, as well as the overlaid numerical (dashed lines) non-linear results. The close agreement between the experimental and numerical results convey that the model is accurately capturing the physical behavior observed experimentally.

To understand mechanical benefits of the disclosed structural architecture, the performance of a disclosed design is compared to that of three other two-dimensional ("2D") lattices, all based on a square architecture with edge lengths L and comprising struts with rectangular cross-sections and depth H large enough to avoid any out-of-plane deformation. More specifically, the comparison is made relative to Design A, Design B, Design C, and Design D. Design A, which is illustrated in FIG. 2A, and includes horizontal and vertical elements with thickness T_{A,nd} = 0.1L and two sets of parallel double diagonals with thickness T_{A,d} = 0.05L located at a distance $S = L / \left(\sqrt{2}+2\right)$ from the nodes (as illustrated in FIG. 2A). Design B, which is illustrated in FIG. 2B, is similar to Design A but only contains a single diagonal with thickness T_{B,d} = 0.1L crossing each of the closed cells. Design C, which is illustrated in FIG. 2C, is similar to bracings found in modern structural engineering and contained a crossed set of diagonal beams with thickness T_{C,nd} = 0.05L in every cell. Lastly, Design D, which is illustrated in FIG. 2D, has no diagonal reinforcement and horizontal and vertical elements with thickness ${T}_{D , end} = 0.1 L \left(1+1/\sqrt{2}\right)$. All four designs share the same total volume and that for Designs A, B, and C the ratio between the volume of the diagonals and non-diagonals struts is identical.

The mechanical response under uniaxial compression is compared along the vertical elements of the four lattices described above in reference to Designs A-D. Samples with 6x6 tessellations of square cells with L = 1.5 cm and H = 4 cm are fabricated with a Connex500 multi-material 3D printer (Stratasys, Eden Prairie, Minnesota, United States) from a Shore A 95 durometer digital elastomer (FLX9795-DM) and are compressed uniaxially using a single axis Instron (Model 5969) with a 50 kN load cell (as illustrated in FIG. 2E). Two key features emerge from the stress-strain curves reported in FIG. 2F. First, all designs with diagonal reinforcement (i.e., Designs A-C) are characterized by a nearly identical initial elastic response, indicating that the different diagonal reinforcement designs do not impact the structure's initial overall stiffness. Design D, as expected, exhibits a higher initial stiffness because of its thicker vertical and horizontal elements. Second, all curves show a clear maximum load bearing capacity, with Design A accommodating the highest load. Because such maximum corresponds to the onset of buckling, it is inferred that Design A displays the highest critical buckling stress between the considered designs. Furthermore, as illustrated in FIG. 2E, in all three designs with diagonals the post-buckling behavior results in a homogeneous pattern transformation throughout the sample. Differently, for Design D the critical mode has a much larger wavelength than the size of a square unit cell and results in a post-buckled shape qualitatively similar to that of a compressed buckled beam.

As shown in FIG. 2F, close agreement exists between the numerical and experimental results, confirming the accuracy of the analyses. Next, the finite element model is extended to explore the effect of additioonal loading direction.

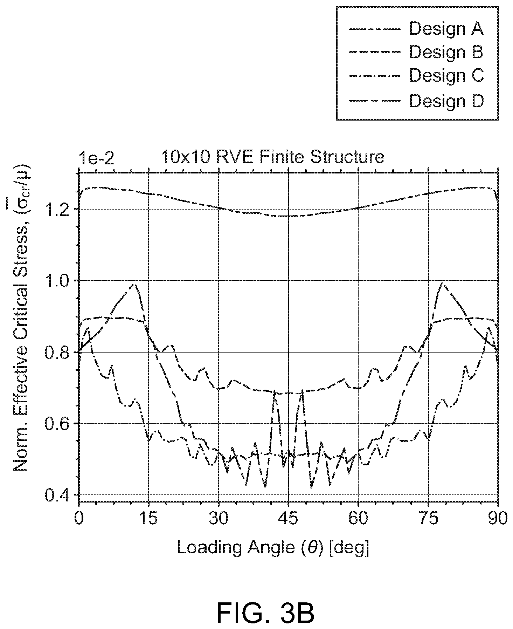

Referring generally to FIGs. 3A-3F, a structure mechanical response is illustrated. FIG. 3A shows a chart with the structural stiffness for the different designs as a function of loading angle. The chart is generated using periodic infinite RVE arranged in a 10 by 10 unit with periodic boundary condition. FIG. 3B shows a chart with effective buckling stress for a finite (non-periodic) 10 by 10 unit-cell structure. FIGs. 3C-3F show a buckling mode for Design A-D at 0° loading angle. A 10x10 unit cell periodic structure is used to capture the macroscale behavior of Design D.

In FIG. 3A, the evolution of the effective stiffness, E̅, is reported as a function of the loading angle θ. The stiffness of all structures containing diagonal reinforcement is virtually identical for any loading angle, further confirming that the structural stiffness is nearly entirely governed by the amount of material allocated along the loading direction. As a result, Design D, in which all of the material is allocated to the non-diagonal elements, has the highest stiffness for θ = 0°, but has almost negligible load-bearing capacity for θ = 45°, where the only contribution to its stiffness comes from the minimal bending resistance of the joints.

Next, the effect of θ on the buckling behavior of Designs A-D is investigated. The effective critical buckling stress (σ̅_{cr}) of Design A is higher than the other diagonally reinforced designs (namely Design B and Design C) for all values of θ (FIGs. 3 D and 3E).

Having demonstrated the benefits of Design A compared to Designs B-D, a question is whether there exists a different diagonally reinforced square lattice design with even higher critical buckling stress. To answer this question, an optimization problem identifies the number of diagonals, N, their distance from the nodes of the square lattice Si (with i = 1, 2, .., N), as well as the ratio between diagonal and non-diagonal elements λ = V_{nd}/V_{d} (V_{nd} and V_{d} being the volume of the non-diagonal and diagonal elements, respectively) that result in the highest buckling stress. Particularly, finite size structures are considered that are composed of 3x3 RVEs and that focus on uniaxial compression parallel to the non-diagonal elements (i.e. θ = 0°) while constraining the total volume of the RVE to match that of the designs considered in FIGs. 2A-2F. The objective function 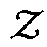 = σ̅_{cr} is maximized using finite element simulations. For each set of inputs identified by optimization algorithm, a finite element buckling analysis is conducted to obtain σ̅_{cr} and, therefore, evaluate the objective function Z. Note that seven separate optimizations are conducted, each considering a fixed integer number of diagonal elements N, ranging from one to seven ( $N = ℤ ∈ \left[1, 7\right]$). Based on the high strength of lattices reinforced by diagonals aligned at a 45°, in all the runs it is assumed that all diagonals are oriented at 45° with respect to the non-diagonal members and that V_{d} and V_{nd} are distributed equally among the diagonal and non-diagonal elements, respectively. Furthermore, to ensure the symmetry, it is assumed that S₂ᵢ₋₁ = S₂ᵢ (i = 1, 2, ..., N/2) if N is an even number and Si = 0 and S₂ᵢ₋₁ = S₂ᵢ (i = 2, 3, ..., (N - 1)/2) for off values of N.

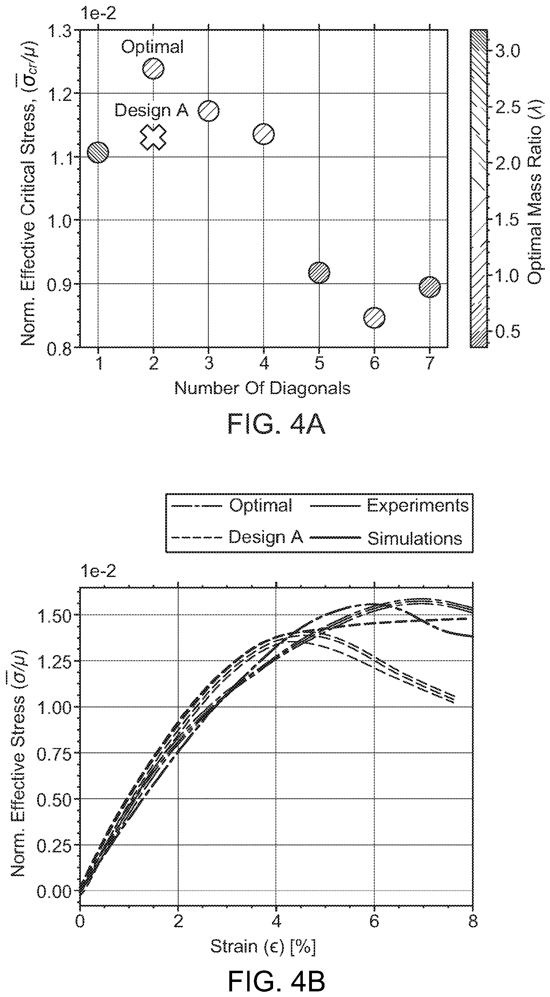

Referring generally to FIGs. 4A and 4B, charts shows critical buckling load optimization results. Referring specifically to FIG. 4A, a chart shows the optimal value of critical buckling load for varying number of diagonals. Geometries in this optimization analysis are defined to match that of the experimental setup in order to optimize a realistic structure found in modern lattice applications. The shade for each point in this graph represents the optimal mass ratio λ parameter output by the optimization algorithm for that configuration.

Referring specifically to FIG. 4B, a chart shows the experimental (solid lines) stress-strain curves for 3 independently tested samples of each design, as well as the overlaid numerical (dashed lines) non-linear results comparing both Design A and the Optimization Design. In FIG. 4B, the Optimization Design has proven slightly better than Design A. Additionally, the chart of FIG. 4B shows the highest σ̅_{cr} identified by the optimization algorithm for all considered number of diagonals N. Remarkably, it is determined that the highest σ̅_{cr} is only 9.55% higher than that of Design A and occurs for a design similar to Design A (with two diagonals located at a distance S₁ = S₂ = 0.1800L from the nodes and volume is distributed so that λ = 0.6778). As such, this numerical prediction, which is validated by experimental results (illustrated in FIG. 4B) indicates that Design A is exceptionally close to that providing the highest critical stress.

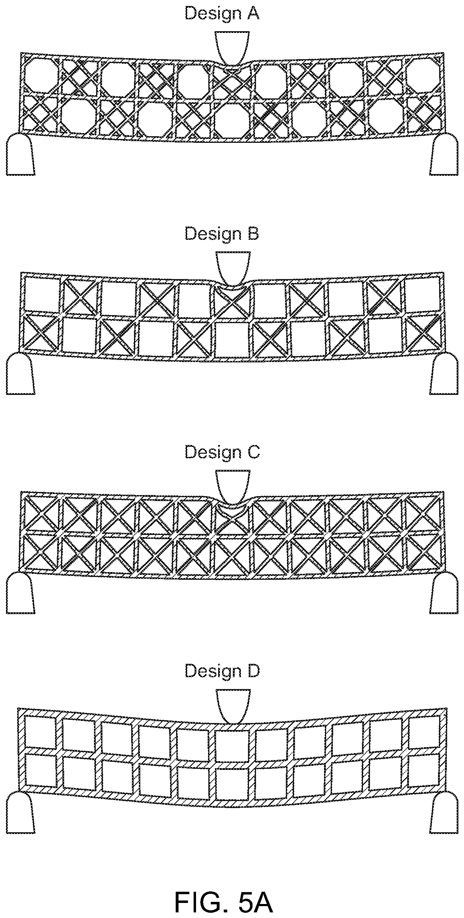

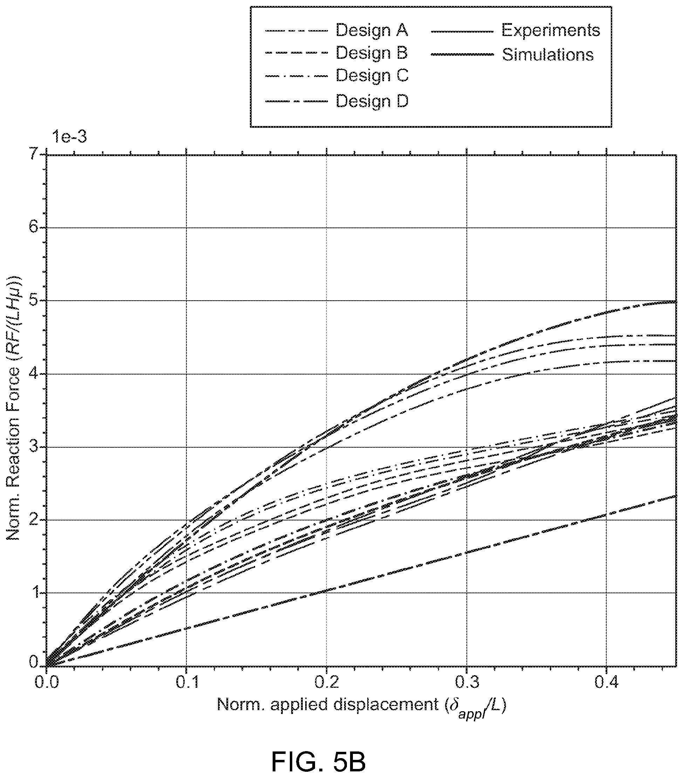

Referring generally to FIGs. 5A and 5B, an experiment provides bridge loading experimental and numerical results. The experimental results are from 3-point bend testing of 11 cell (5.5 unit cell) array aligned horizontally. In FIG. 5A, the deformation of the structure at δₐₚₚₗ/L = 0.45 is illustrated for each of the four Designs A-D. In FIG. 5B, a chart shows the experimental reaction force vs. applied displacement and its equivalent nonlinear finite element result.

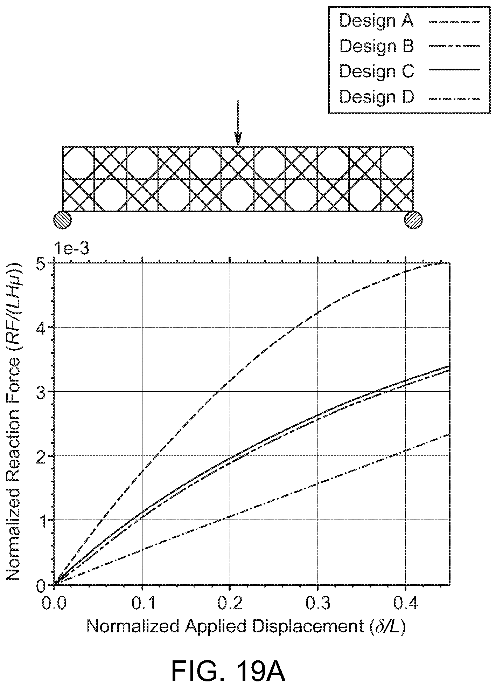

However, the superior mechanical performance of Design A is not limited to this loading condition. To demonstrate this important point, in FIGs. 5A and 5B results are presented for tessellation of 11 x 2 square cells loaded in 3-point bending. Both experiments and finite element simulations indicate that Design A is stiffer and can withstand higher loads by approximately 15% over a larger range of applied displacements, illustrating the potential benefit of incorporating such design in suspended structures. Finite element simulations are further used to evaluate the performance of Designs A-D in 5 other loading regimes with results identified in FIGs. 19A-21D. For all of the loading cases considered, it is found that Design A is able to withstand significantly higher loads than any of the other structures - making it the best candidate to realize load bearing structures for a variety of applications.

Design A is experimentally compared to other common diagonally reinforced square lattices (Design B-C) and to the non-diagonally reinforced lattice (Design D), all with the same total mass. It is determined, based on the comparison, that Design A provides a superior mechanism for withstanding uniaxial loads prior to the onset of buckling. Furthermore, by simulating these designs using finite element analysis Design A has proven superior buckling performance not only in uniaxial compression but also in every other possible loading direction. Additionally, by using optimization tools to survey the design space it is determined that Design A is nearly identical to the design providing the highest critical stress under uniaxial compression. Finally, by expanding the numerical simulations, a wide spectrum of loading conditions are analyzed and Design A proves to maintain robustness for a large number of conditions considered. Therefore, the results presented here indicate that by intelligently allocating material within a square lattice, a structure is achieved that is at least 15% stronger without the need for adding more material or reduce its stiffness. The mechanical properties of Design A has the implication to improve square lattice designs found in modern infrastructure such as bridges and buildings, as well as small scale lattice applications.

### DESIGN EXAMPLES

In this study, four different lattice configurations (Designs A, B, C, and D) are constrained to deform in an in-plane setting only. In an effort to conduct a fair performance comparison between the different designs, all four lattices are characterized by containing the same total volume of material and a fixed volume ratio between non-diagonal and diagonal elements. Two different shapes are considered for the cross-section of the struts: circular and rectangular. For the circular cross-section case, the diameters are D_{α,nd} and D_{α,d} of the non-diagonal (i.e. horizontal and vertical) and diagonal struts in the α-th design, respectively, and out-of-plane buckling is neglected. For the rectangular cross-sections, the depth H and in-plane thickness T_{α,nd} and T_{α,d} are selected to avoid out-of-plane deformation (i.e., the depth over thickness ratio is selected to be sufficiently large). Finally, it is important to note that the slenderness of the non-diagonal members in the α-th design ∈ [A, B, C] is chosen as $\frac{{D}_{α , nd}}{L} = 0.1 , and \frac{{T}_{α , nd}}{L} = 0.1 ,$ (S1) for the case of circular and rectangular cross-section. The disclosure below further describes in detail the unit cells for four different designs, and provides the derivations for each geometry cross-section characteristics.

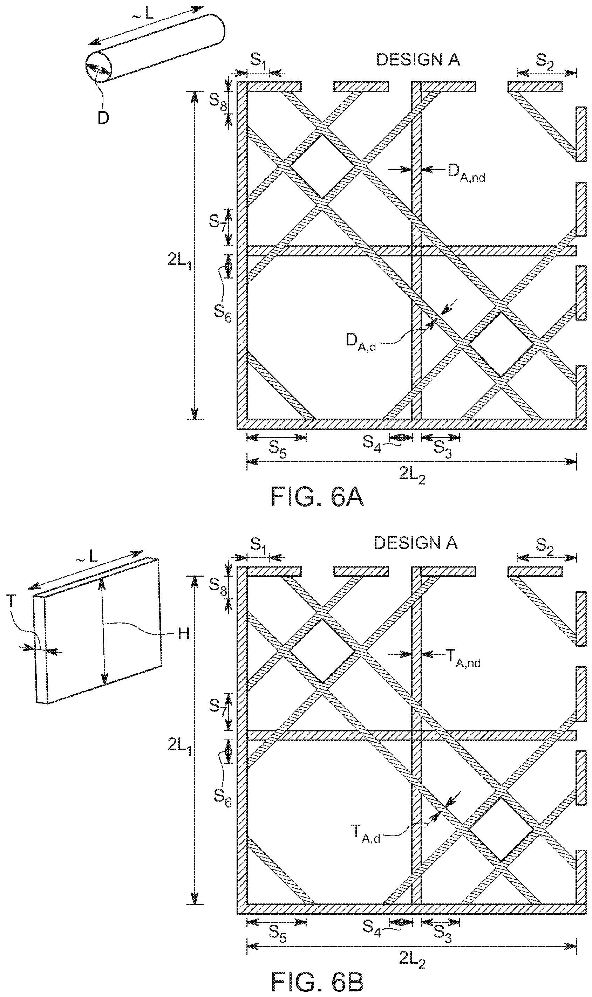

Referring generally to FIGs. 6A and 6B, a unit cell is illustrated for Design A. This design consists of a square grid reinforced by a double diagonal support system. FIG. 6A shows dimensions of this design considering a circular cross-section, and FIG. 6B shows dimensions of this design considering a rectangular cross-section. In both cases, the horizontal and vertical non-diagonal struts have a total length 2L, in which L1 = L2 and all Sᵢ = S. For FIG. 6A, considering a circular cross-section, the non-diagonal diameter is denoted as D_{A,nd} and it is assumed that D_{A,nd}/L = 0.1, and the diagonal elements have a diameter D_{A,d} = 2D_{A,nd}. For FIG. 6B, considering a rectangular cross-section, the non-diagonal thickness is denoted as T_{A,nd} and it is assumed that T_{A,nd}/L = 0.1, and the diagonal elements have a thickness T_{A,nd} = 2T_{A,d}. For all rectangular cross-section elements, the depth H is assumed to be equal and large enough to constrain any out-of-plane deformation.

Design A consists of a square grid reinforced by a double diagonal support system (as illustrated in FIGs. 6A and 6B). As for the case of Design A, the diagonal elements are assumed to form an octagonal opening on every other cell, so that they intersect the horizontal and vertical struts at a distance $ΔL = L / \left(\sqrt{2}+2\right)$ from the nodes, where L denote the length of the vertical/horizontal struts.

CIRCULAR CROSS-SECTION - If it assumed that the cross-section of all struts is circular, the projected area and volume for the non-diagonal (A_{A,nd} and V_{A,nd}) and diagonal (A_{A,d} and V_{A,d}) members is given by ${A}_{A , nd} = 8 {LD}_{A , nd} ;$ (S2) ${V}_{A , nd} = 8 L \left(π\frac{{D}_{A , nd}^{2}}{4}\right) = 2 {Lπ}_{A , d}^{2} ;$ (S3) and ${A}_{A , d} = 8 \sqrt{2} {LD}_{A , d} ;$ (S4) ${V}_{A , d} = 8 \sqrt{2 L} π \frac{{D}_{A , d}^{2}}{4} = 2 \sqrt{2} {LπD}_{A , d}^{2} .$ (S5)

Because the projected area ratio of the non-diagonal to diagonal elements in Design A has been measured to be $\frac{{A}_{A , nd}}{{A}_{A , d}} = 1.4 ;$ (S6) by substituting eq. (S2) and eq. (S4) into the equation above it is determined that for Design A ${D}_{A , nd} = 1.4 \sqrt{2} {D}_{A , d} \approx 2 {D}_{A , d} .$ (S7)

Substitution of eq. (S7) into eq. (S3) and eq. (S5) yields $\frac{{V}_{A , nd}}{{V}_{A , d}} = \frac{2 {LπD}_{A , nd}^{2}}{2 \sqrt{2} {LπD}_{A , d}^{2}} = 2 \sqrt{2}$ (S8) and ${V}_{A , T} = {V}_{A , nd} + {V}_{A , d} = 2 πL \left({D}_{A , nd}^{2}+\sqrt{2}{D}_{A , d}^{2}\right) = 2 π {LD}_{A , nd}^{2} \left(1+\frac{1}{2 \sqrt{2}}\right) ;$ (S9) where V_{A,T} indicates the total volume of the unit cell for Design A.

Finally, it is important to note that in this study Design A is used as the base model, and thus constrain the total volume of all the other unit cell designs with circular cross-section to be equal to that of Design A, namely, ${V}_{α , d} + {V}_{α , nd} = {V}_{A , T} = 2 π {LD}_{A , nd}^{2} \left(1+\frac{1}{2 \sqrt{2}}\right) ;$ (S10) with α = B, C and D. For Designs B and C, which include diagonal elements, the volume ratio of the non-diagonal to diagonal elements is constrained to be the same as in Design A $\frac{{V}_{α , nd}}{{V}_{α , d}} = \frac{{V}_{A , nd}}{{V}_{A , d}} = 2 \sqrt{2} ;$ (S11) with α ∈ B and C.

RECTANGULAR CROSS-SECTION - If it is assumed that the cross-section of all struts is rectangular, the projected-area for the non-diagonal (A_{A,nd}) and diagonal (A_{A,d}) members is given by ${A}_{A , nd} = 8 {LT}_{A , nd}$ (S12) and ${A}_{A , d} = 8 \sqrt{2} {LT}_{A , d} ,$ (S13) where T_{A,nd} and T_{A,d} are the non-diagonal and diagonal in-plane strut thickness for Design A, respectively. Because for Design A A_{nd}/A_{d}≈ 1.4, it follows that ${T}_{A , nd} = 2 {T}_{A , d .}$ (S14)

Finally, also for the case of rectangular cross-section Design A is the base model, and thus the total volume is constrained of all the other unit cell designs with rectangular cross-section to be equal to that of Design A, namely, ${V}_{A , T} = {V}_{α , d} + {V}_{α , nd} = 8 LH \left({T}_{A , nd}+\sqrt{2}{T}_{A , D}\right) = 8 {LHT}_{A , nd} \left(1+\frac{1}{\sqrt{2}}\right) ;$ (S15) with α ∈ B, C and D. Moreover, for Designs B-C, which include diagonal elements, the volume ratio of the non-diagonal to diagonal elements is constrained to be the same as in Design A, $\frac{{V}_{α , nd}}{{V}_{α , d}} = \sqrt{2} ;$ (S16) with α ∈ B and C.

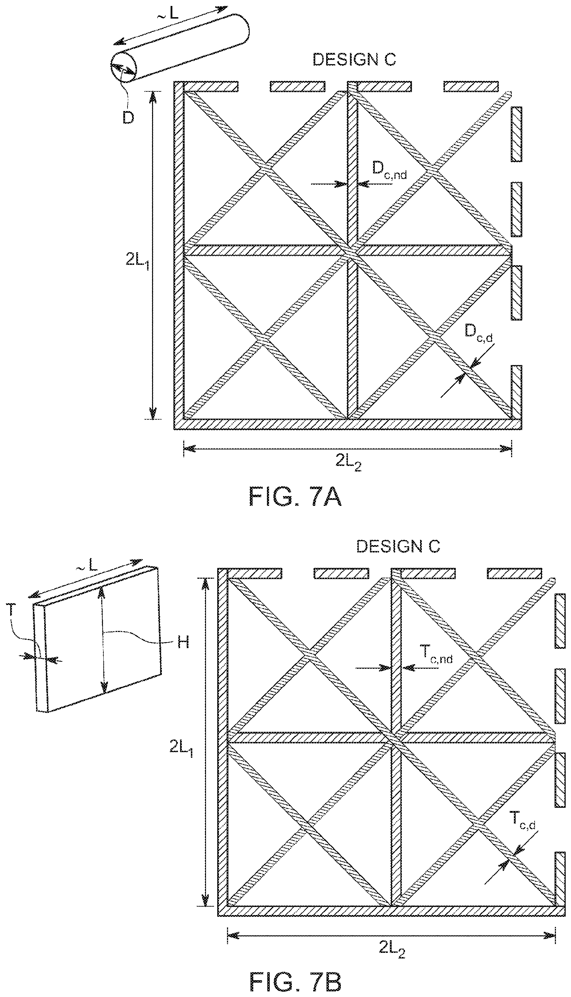

Referring generally to FIGs. 7A and 7B, a unit cell is illustrated for Design C. This design consists of a square grid with all cells being reinforced by diagonal trusses passing through the nodes. FIG. 7A shows dimensions of this design considering a circular cross-section, and FIG. 7B shows dimensions of this design considering a rectangular cross-section. In both cases, the horizontal and vertical non-diagonal struts have a total length 2L, with L1 = L2. For FIG. 7A, considering a circular cross-section, the non-diagonal diameter is denoted as D_{C,nd} and, as with Design A, it is assumed that D_{C,nd}/L = 0.1, and the diagonal elements have a diameter D_{C,d} = D_{C,nd}/2. For FIG. 7B, considering a rectangular cross-section, the non-diagonal thickness is denoted as T_{C,nd} and it is assumed that T_{C,nd}/L = 0.1, and the diagonal elements have a thickness T_{C,nd} = 2T_{C,d}. For all rectangular cross-section elements, the depth H is assumed to be equal and large enough to constrain any out-of-plane deformation.

CIRCULAR CROSS-SECTION - For this design with circular cross-section, the volume of the non-diagonal and diagonal members of the unit cell are given by: ${V}_{C , nd} = {V}_{A , nd} = 2 {LπD}_{A , nd}^{2}$ (S25) and ${V}_{C , d} = {V}_{A , d} = 2 \sqrt{2} {LπD}_{A , d ′}^{2}$ (S26) respectively. Using the constraints provided by eq. (S10) and eq. (S11), the following formulas are obtained: ${D}_{C , nd} = {D}_{A , nd ,}$ (S27) and $\frac{{D}_{C , d}}{{D}_{C , nd}} = \frac{1}{2} .$ (S28)

RECTANGULAR CROSS-SECTION - For this design with circular cross-section, the volume of the non-diagonal and diagonal members of the unit cell are given by ${V}_{C , nd} = 8 {LT}_{C , nd} H$ (S29) and ${V}_{C , d} = 8 \sqrt{2} {LT}_{C , d} H .$ (S30)

Using the constraints provided by eq. (S15) and eq. (S16), as well as the above volumes, the following formulas are obtained: ${T}_{C , nd} = 2 {T}_{C , d ,}$ (S31) and ${T}_{C , nd} = {T}_{A , nd .}$ (S32)

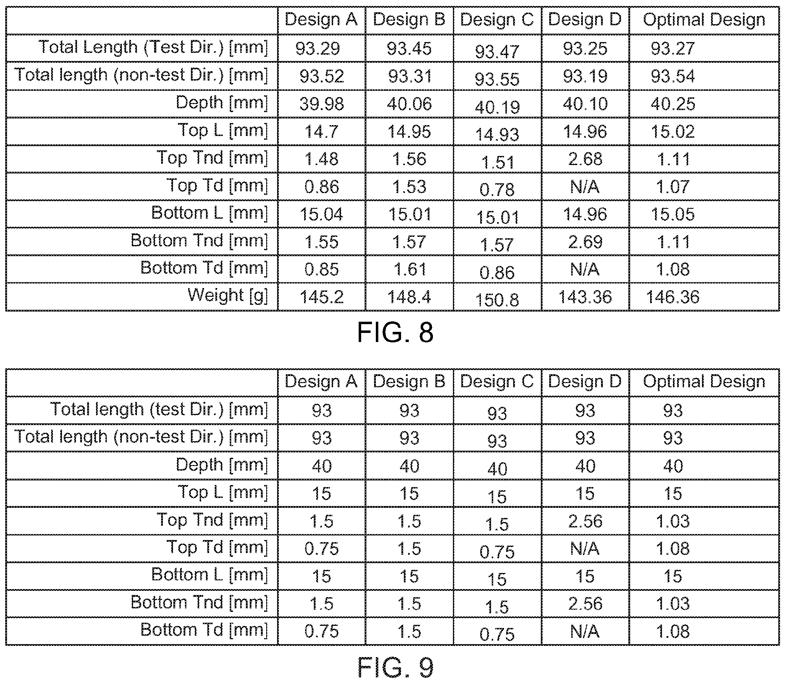

Referring to FIG. 8, a table shows caliper measurements averaged over the three separate 3D specimens tested for each design. The units provided are in [mm] and [kg], for lengths and weights, respectively. Because these are square samples, there are 2 overall sample lengths provided, one that is along the testing direction and one that is perpendicular to the testing direction. Measurements are made at both along the top face as well as the bottom face of the structure. As expected, the top face dimensions are generally smaller than the bottom face due to 3D printing layer depositions. All measurements are conducted prior to testing the samples.

Referring to FIG. 9, a table provides the expected baseline measurements. These are the defined parameters for the 3D printed geometries. The units provided are in [mm] for all lengths.

### TESTING

Each of the specimens is 3D printed using a Conex500 multi-material 3D printer. Each of the specimens is printed in parallel along with the print-head direction as to minimize material anisotropy between specimens. During the fabrication process, a photosensitive liquid precursor (the 3D printer ink) is deposited in a voxel-by-voxel fashion. The 3D printed specimens are placed individually on an Instron 5969 with standard compression plates on a 50kN load cell. While similar results are obtained regardless of whether the models are loaded parallel or perpendicular to the print direction, for experimental consistency all tests are performed with models oriented parallel to the print direction.

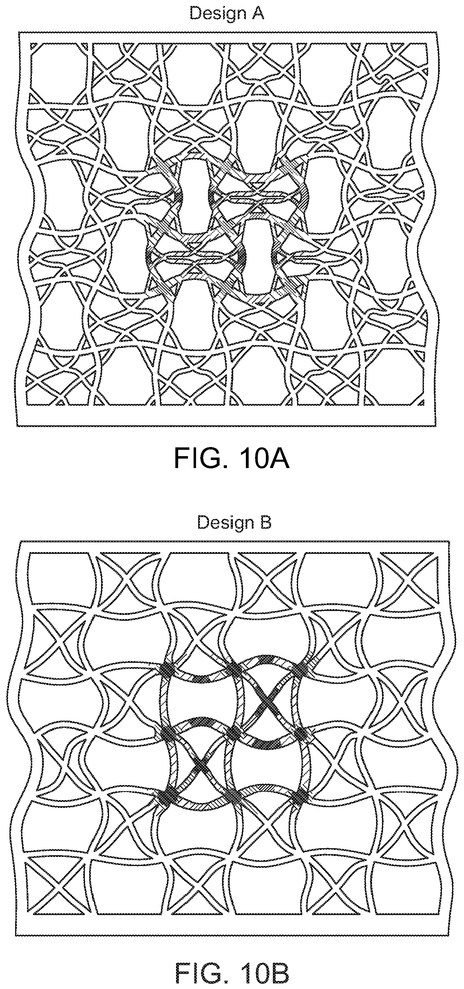

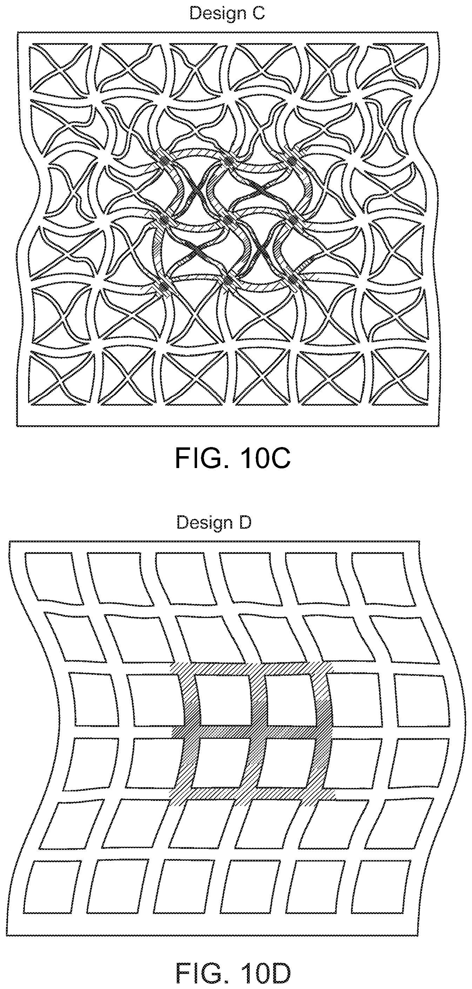

Referring to FIGs. 10A-10D, a deformation is overlaid with experimental results. Specifically, FIGs. 10A-10D show the deformed finite element results overlaid on top of pictures taken of the deformed experimental specimen. The close agreement between the experiments and simulations suggests that the finite element simulations are accurately capturing the physical deformation of the specimens.

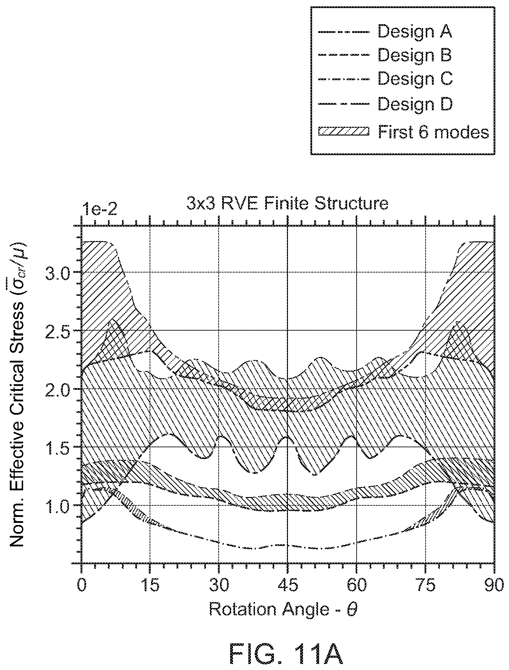

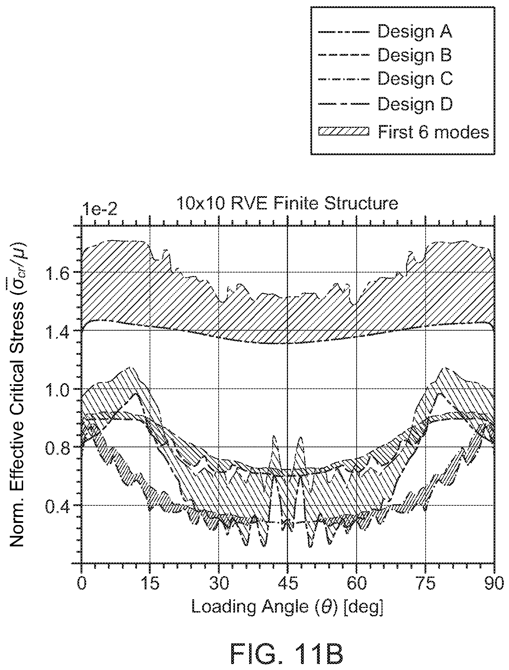

Referring to FIGs. 11A and 11B, charts show results of a finite size geometry square cutting. FIG. 11A shows the normalized critical effective buckling stress for a 3x3 RVE finite size structures for all loading angles. FIG. 11B shows the normalized critical effective buckling stress for a 10x10 RVE finite size structures for all loading angles. The shaded part in FIGs. 11A and 11B represents the lowest 6 buckling modes range. Both of these plots provide a clear indication on the superior performance of Design A when comparing to Designs C-D.

### OPTIMIZATION ANALYSIS

In an effort to identify lattice configurations resulting in large critical loads, a Python implementation was used of the Covariance Matrix Adaptation Evolution Strategy (CMA-ES). CMA-ES is an evolutionary algorithm that is used to solve optimization/inverse problems by iteratively solving several forward problems to adjust a covariance matrix of the solution. Since it is a derivative free algorithm, CMA-ES is well suited for optimization problems of high dimensionality and non-linear parameter topology, such as the examples disclosed in the present disclosure.

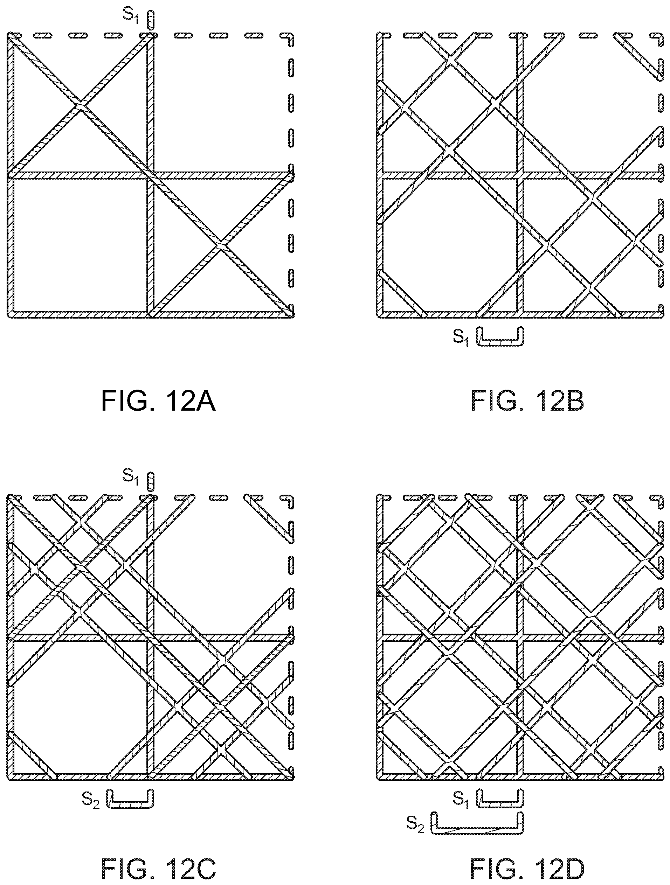

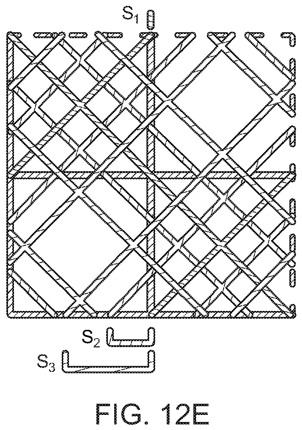

Referring generally to FIGs. 12A-12E, a schematic depicts separation parameters for optimization analysis. This schematic shows the separation parameters for optimization geometry at different levels of complexity, up to five diagonals with distances are denoted by Sᵢ. FIG. 12A shows the structure with 1 diagonal and no separation parameter. FIG. 12B shows the structure with 2 diagonals with one separation parameter given by S₁. FIG. 12C shows the structure with 3 diagonals with one separation parameter S₂. FIG. 12D shows the structure with 4 diagonals and 2 diagonal separation parameters S₁,S₂. FIG. 12E shows the structure with 5 diagonals and 2 separation parameters S₂, S₃. For each set of even diagonals, the distance Sᵢ is the same from the center for both sides.

In this study CMA-ES is used to identify
- the number of diagonals, N;
- the volume ratio of non-diagonal to diagonal members, λ = V_{nd} /V_{d}; and
- the separation between each even set of diagonals, Si (see Fig. S14).

The result is a lattice structure with the largest critical load. For such optimization problem, the number of optimization variables increases with the number of diagonals incorporated in the model (i.e. the total number of parameters are $1 + \frac{1}{2} \left(N-\left(N mod 2\right)\right)$ for a given optimization instance with N number of diagonals). Note, for simulations with odd number of diagonal reinforcements, only an even number of diagonals are separated while keeping one diagonal going through the non-diagonal junction in order to ensure geometry symmetry (as illustrated in FIGs. 12A-12E).

The algorithm's initial values are chosen to be in the center of the design space, namely, λ = 1 and diagonal separation for the even set of diagonals Sᵢ = 0.5 * L. The covariance matrix is initialized uniformly with standard deviation (σ) half of the domain space, which are normalized to remain between 0 and 1. The optimization is run for uniaxial loading condition in the direction parallel to the vertical elements.

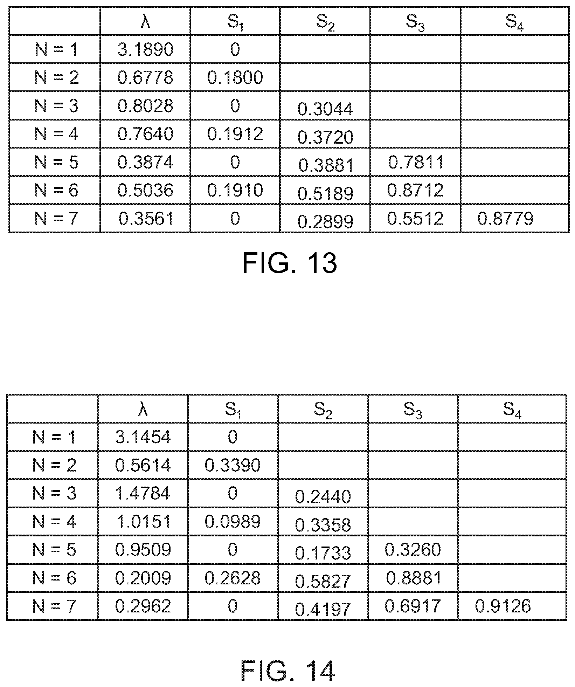

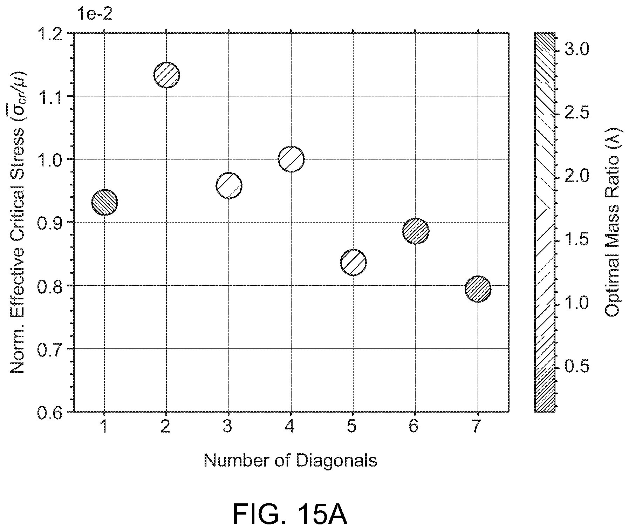

For the optimization results described above, the critical buckling load of a finite size structure is maximized using a single objective target function. However, an equivalent analysis is performed to maximize the critical buckling stress (illustrated in FIGs. 15A-15B) of an infinite periodic structure as the target response. The resultant parameter values from the optimization for the finite size structure presented in FIGs. 4A-4B can be found in FIG. 13. The resultant parameter values from the optimization for infinite periodic optimization are identified in the table of FIG. 14 for the stress optimization.

Referring to FIG. 13, a table shows optimization of a finite structure buckling load. Specifically, the table shows output parameters from the analysis necessary to construct each optimum structure.

Referring to FIG. 14, a table shows optimization result parameters of a buckling load for an infinite periodic structure. Specifically, the table shows output parameters from the analysis necessary to construct each optimum structure.

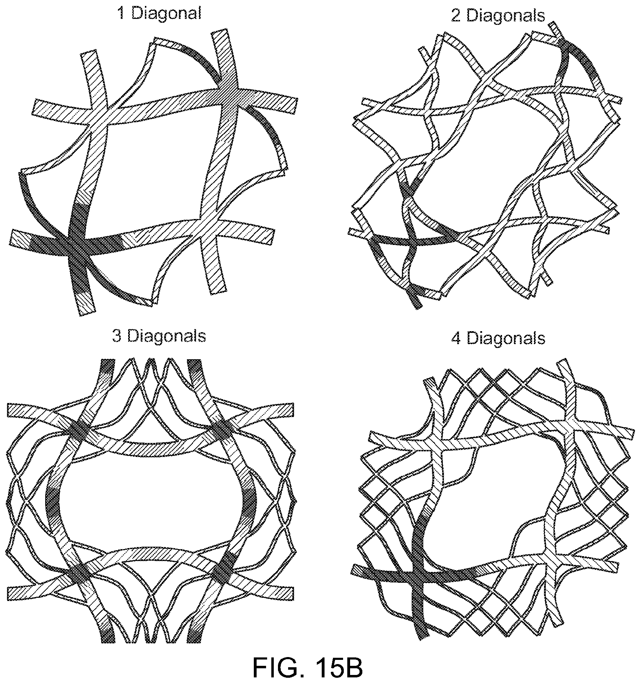

Referring to FIGs. 15A and 15B, critical buckling load optimization results are illustrated for an infinite periodic structure. FIG. 15A shows the optimal value of critical buckling load for a varying number of diagonals. For all simulations, the total mass of the structure is maintained constant while the mass-ratio is allowed to vary. Furthermore, the diagonal separation for each pair of even diagonals is allowed to vary together ensuring half symmetry of the structure at all times. The optimization is run under a uniaxial loading condition. The shade of each point represents the optimal mass ratio λ parameter for that configuration. FIG. 15B shows the resulting deformed geometries for designs including one to four diagonals. The shaded areas in each structure represent the scale-less deformed displacement as a result of buckling.

MASS RATIO DERIVATION FOR ARBITRARY NUMBER OF DIAGONALS - To parameterize the numerical model, a determination is made how to allocate mass between diagonals and non-diagonals when the number of diagonals is increasing. To obtain this derivation, a number of initial assumptions are made, namely:
- in-plane geometry is uniform, the in-sectional dimension H is a constant;
- all diagonals elements have the same dimension;
- all non-diagonal elements have the same dimension; and
- area of overlapping beam crossing is negligible and unaccounted.

To begin this analysis, the individual total volume of the non-diagonal and diagonal members is computed as $\frac{{V}_{nd}}{LH} = 8 {T}_{nd} ; and$ (S39) $\frac{{V}_{d}}{LH} = 4 \sqrt{2} {NT}_{d} .$ (S40)

In the above equations, H is the in-plane thickness dimension, and N is the number of diagonals considered. Using this information, the total volume of the entire unit cell structure V_{T} is computed, namely: $\frac{{V}_{T}}{LH} = \frac{{V}_{nd}}{LH} + \frac{{V}_{d}}{LH} = 8 {T}_{nd} + 4 \sqrt{2} {NT}_{d} .$ (S41)

Thus, the mass ratio is rewritten as: $λ = \frac{{V}_{nd}}{{V}_{d}} = \frac{\sqrt{2} {T}_{nd}}{{NT}_{d}} .$ (S42)

Using eq. (S41), the following expression is obtained: ${T}_{d} = \frac{1}{N 4 \sqrt{2}} \left(\frac{{V}_{t}}{LH}-4{T}_{nd}\right) .$ (S43)

Using eq. (S42), the following expression is obtained: ${T}_{nd} = \frac{λ {NT}_{d}}{\sqrt{2}} .$ (S44)

Inserting eq. (S43) into eq. (S44) the following equation is obtained: ${T}_{nd} = \frac{1}{8} \frac{λ}{1 + λ} \frac{{V}_{T}}{LH} .$ (S45)

Using this and the equation for λ, the expression for D_{d} is obtained, namely: ${T}_{d} = \frac{\sqrt{2}}{8} \frac{1}{N \left(1+λ\right)} \frac{{V}_{t}}{LH} .$ (S46)

Using Design A as a reference, the total volume V_{T} is determined. Specifically, the following is used: ${T}_{nd} = 0.1 L & {T}_{d} = {T}_{nd} / 2 = 0.05 L$ (S47) to solve for $\frac{{V}_{T}}{LH} = 0.8 L + 0.4 \sqrt{2} L .$ (S48)

Thus inserting this into eq. (S46) and eq. (S45), the following is obtained: ${T}_{nd} = \frac{1}{2} \frac{λ}{1 + λ} \left(0.2L+0.1\sqrt{2}L\right) ; and$ (S49) ${T}_{d} = \frac{1}{\sqrt{2}} \frac{1}{N \left(1+λ\right)} \left(0.2L+0.1\sqrt{2}L\right) .$ (S50)

### PARAMETER EXPLORATION

To survey the design space of the double diagonal construction, parametric simulations are explored for 2 variables: diagonal separation and mass ratio. For each of these separate analyses, the Design A geometry is maintained as the base geometry and only the respective variable is varied.

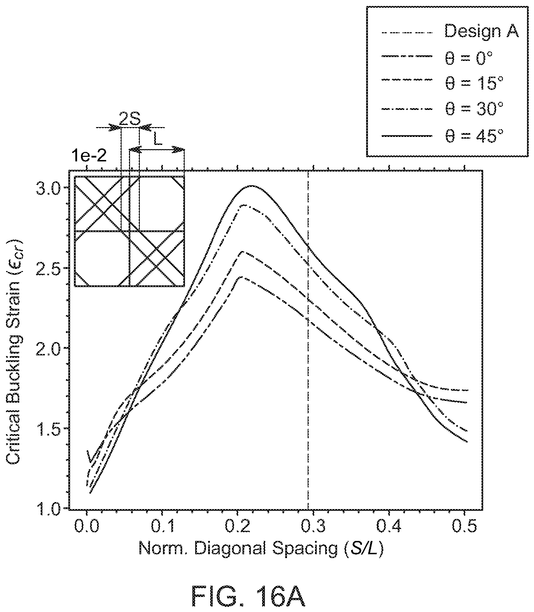

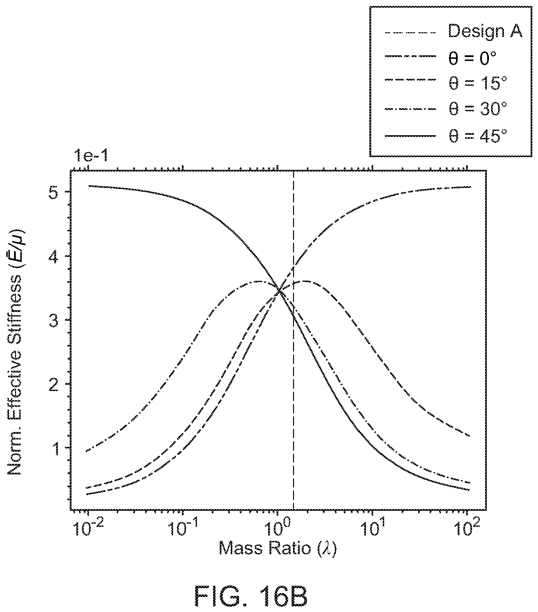

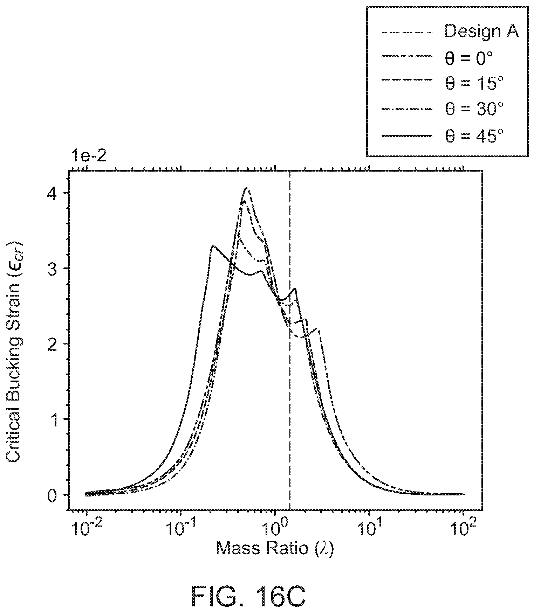

Referring generally to FIGs. 16A-16C, charts show plots for rectangular cross-section parameter exploration. For each of these plots, a single parameter is varied while maintaining the base Design A geometry constant. The dashed vertical line indicates Design A's value for that parameter. FIG. 16A shows the critical buckling strain for varying spacing between diagonals. FIG. 16B shows the structural stiffness of the geometry as the mass ratio λ is varied. FIG. 16C shows the critical buckling strain of the geometry as the mass ratio λ is varied.

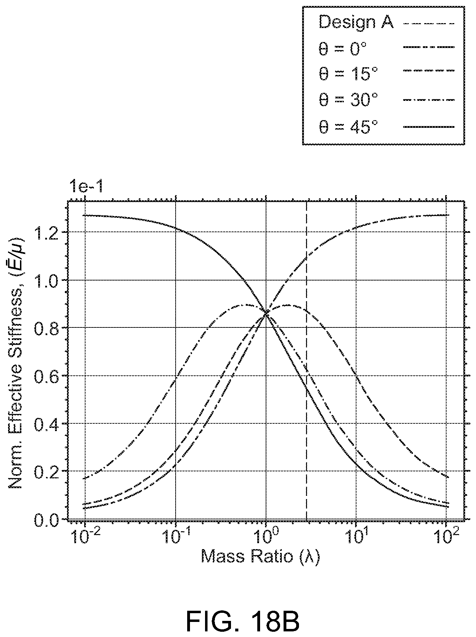

RECTANGULAR CROSS-SECTION - This section shows the results when using a rectangular cross-section for the truss members. From FIG. 16A, it is apparent that there exists an optimum for the diagonal separation that occurs when the spacing between diagonals are approximately 0.2 of the horizontal distance between vertical struts. This optimum value also persists when varying the loading angle. From FIG. 16B, it can be seen that the linear stiffness is symmetrically and almost purely dependent on the mass ratio allocated to diagonal versus non-diagonal elements. Comparing this figure to FIG. 18B, it is determined that even the design cross-section does not change the linear stiffness behavior. FIG. 16C shows that there exists two optimum mass ratios, one where more material is allocated to the diagonal and one where there is more material allocated to non-diagonals.

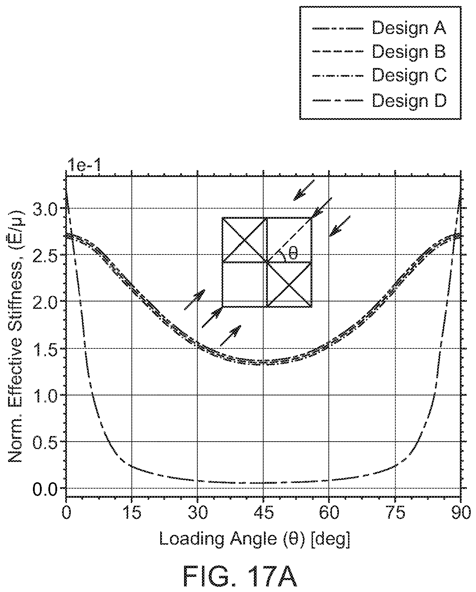

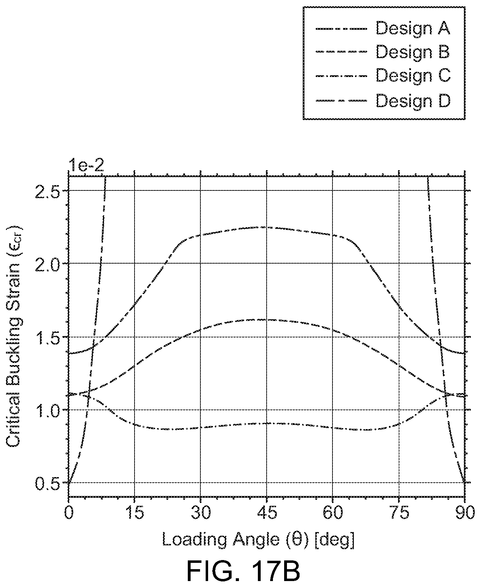

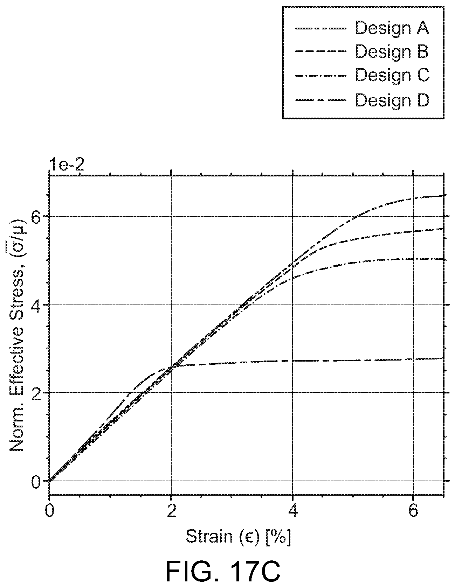

Referring generally to FIGs. 17A-17C, circular cross-section results are illustrated. FIG. 17A shows the linear elastic stiffness for the different designs as a result of varying loading angle. All structures except for the design without diagonal reinforcement (Design D) have the same stiffness. FIG. 17B shows the critical buckling strain for varying loading angle. For all angles, Design A outperforms other diagonally reinforced designs (Design B-C). FIG. 17C shows the results to a nonlinear simulation with circular cross-section for a finite size structure matching that of the experimental setup. The nonlinear simulation is composed of three steps: (i) obtaining the critical buckling deformation via a perturbation analysis; (ii) applying an imperfection in the shape of the critical buckling deformation onto the geometry; (iii) performing a large deformation nonlinear simulation on the perturbed geometry. For all results presented, the geometries are constrained to in-plane deformation only. These results show that the two-diagonal benefit persists beyond a square beam cross-section as long as deformations are constrained to remain in-plane.

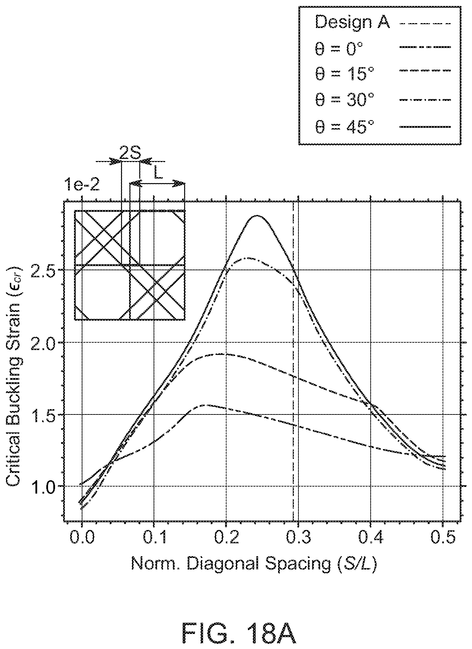

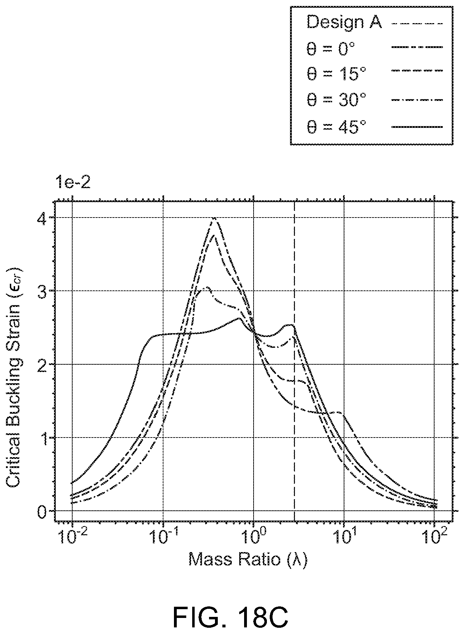

Referring generally to FIGs. 18A-18C, circular cross-section results are illustrated. For each of the represented plots, a single parameter is varied while maintaining the base Design A geometry constant. The dashed vertical line indicates a Design A's value for that parameter. FIG. 18A shows the critical buckling strain for varying spacing between diagonals. FIG. 18B shows the structural stiffness of the geometry as the mass ratio λ is varied. FIG. 18C shows the critical buckling strain of the geometry as the mass ratio λ is varied.

CIRCULAR CROSS-SECTION - The results presented here complement those disclosed above and show that the structural benefit for the Design A persists when using a different cross-section for the structure. For varying loading angles, it is determined that all of the diagonally reinforced designs provide the same stiffness, but Design A consistently provides the best resistance to buckling. For this cross-section the findings are consistent with Design A, and as illustrated in FIGs. 18A-18C, the overall behavior has second order differences illustrated in FIG. 18A, no change illustrated in FIG. 18C, and a large difference in relative magnitude illustrated in FIG. 18C. Furthermore, it is determined that by using a rectangular cross-section the mass ratio is tuned to achieve an overall structure with higher critical buckling strength.

### SLENDER STRUCTURE EXPLORATION

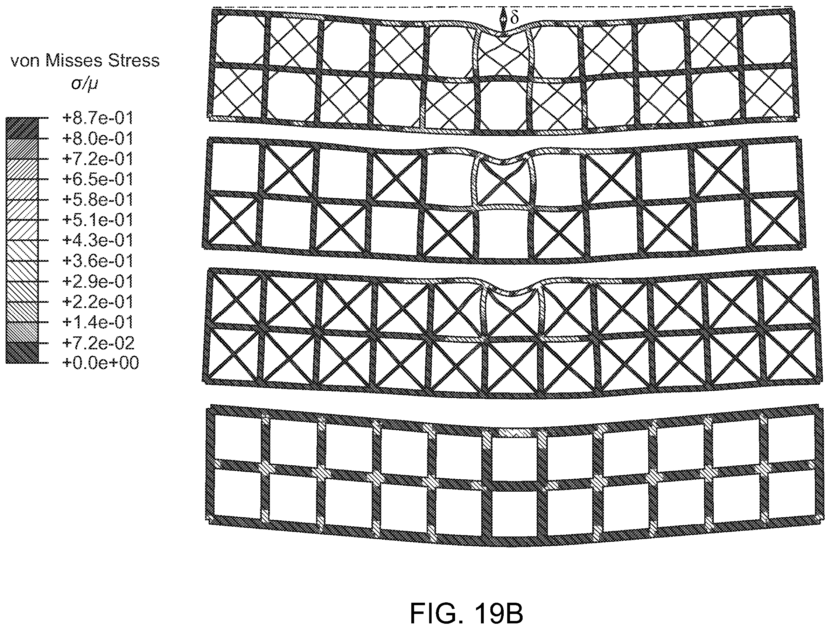

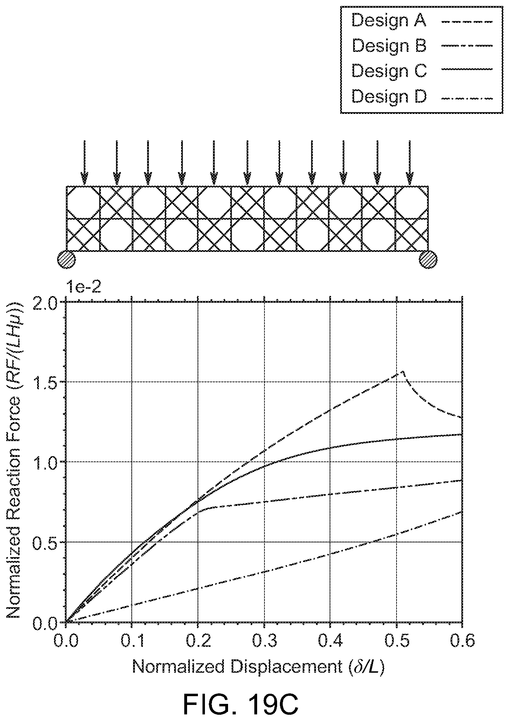

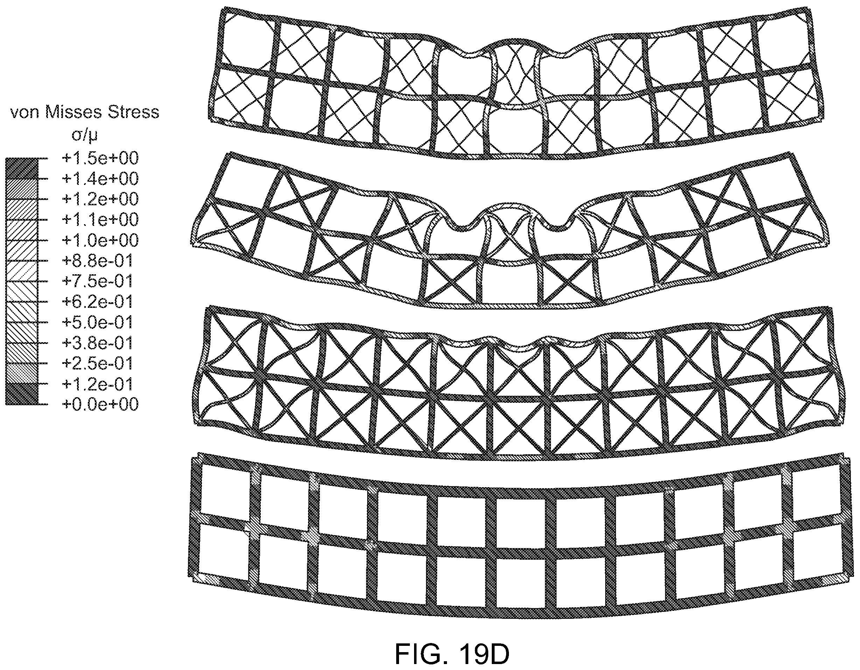

Referring generally to FIGs. 19A-19D, results illustrate a bridge setting with finite element non-linear large scale simulation. For all cases presented in FIGs. 19A-19D, consideration is made to a long realization of each design consisting of 11 cells (5.5 unit cells). FIG. 19A shows quantitative results for a 3-point bend test. In this case a point displacement is applied to the top center of the structure while the bottom outside corners have constrained horizontal (x) and vertical (y) displacements. The normalized reaction force is plotted as a function of the displacement for the different geometries. FIG. 19B shows the deformation of each geometry at the displacement provided at the end of the plot. The lines in this plot provide a measure of the normalized Von Misses stress of the structure. FIG. 19C shows quantitative results of a distributed load test. In this case a distributed load is applied across the top of the structure while the bottom outside corners have constrained x and y displacements. The normalized total reaction force is plotted as a function of the displacement for the different geometries. FIG. 19D shows the deformation of each geometry at the displacement provided at the end of the plot. The lines in this plot provide a measure of the normalized Von Misses stress of the structure.

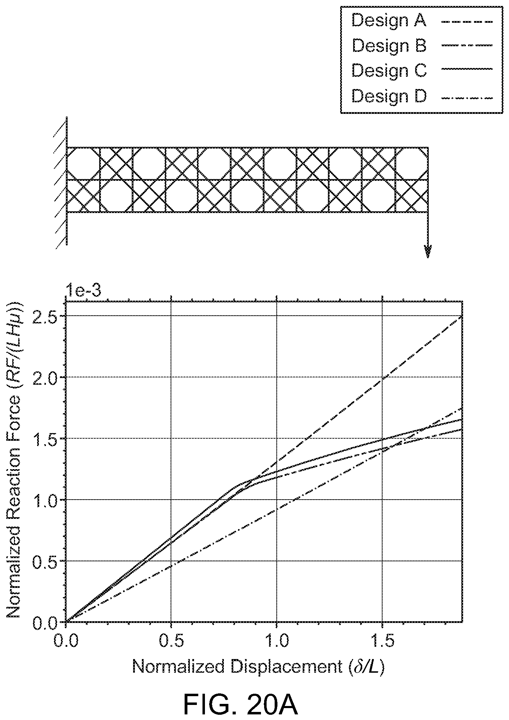

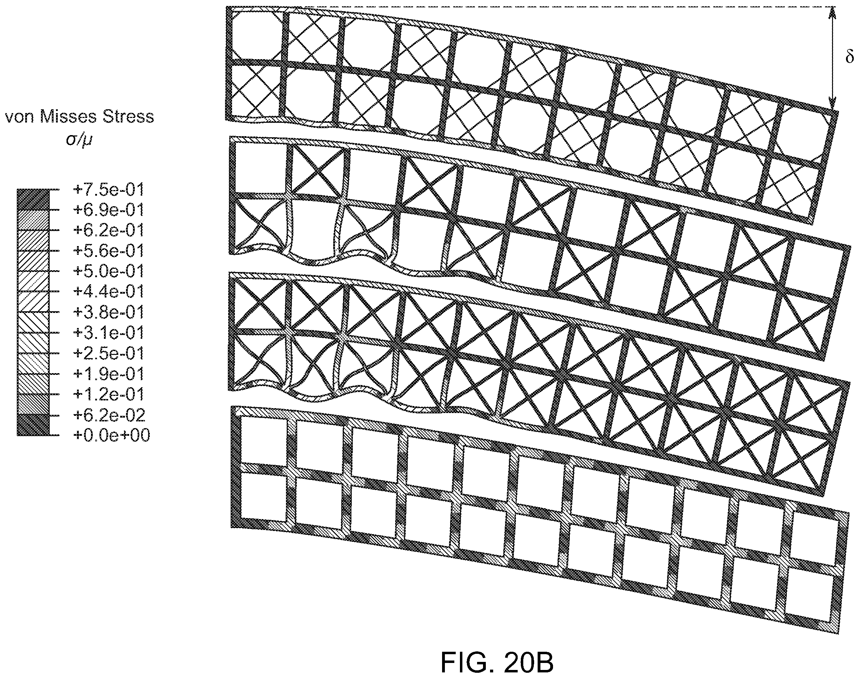

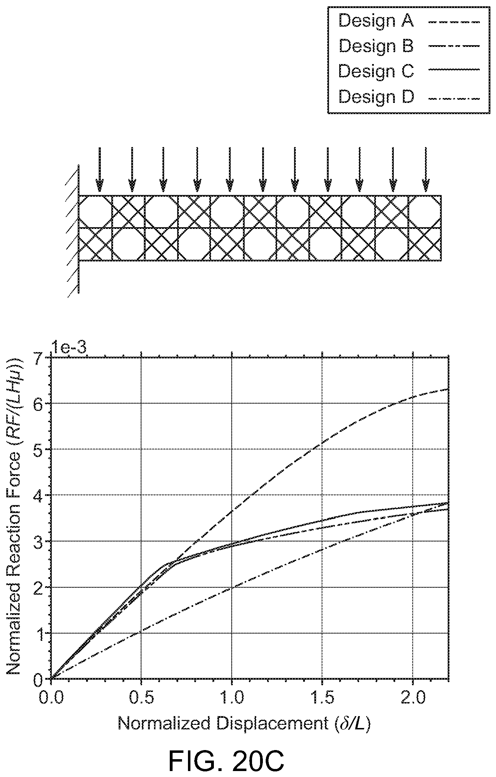

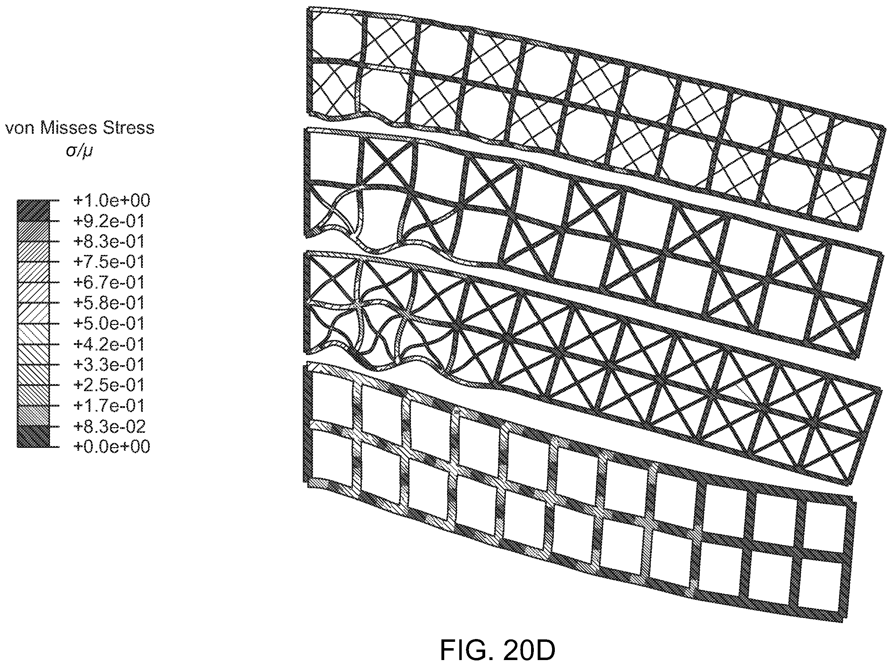

Referring generally to FIGs. 20A-20D, results illustrate a cantilever beam setting with finite element non-linear large scale simulations. For all cases presented FIGs. 20A-20D, consideration is made to a long realization of each design consisting of 11 cells (5.5 unit cells). FIG. 20A shows quantitative results for a simple cantilever beam point bend test. In this case a point displacement is applied to the bottom right of the structure while the left edge of the structure is fixed. The normalized total reaction force is plotted as a function of the displacement for the different geometries. FIG. 20B shows the deformation of each geometry at the displacement provided at the end of the plot. The lines in this plot provide a measure of the normalized Von Misses stress of the structure. FIG. 20C shows quantitative results of a distributed load cantilever beam test. In this case a distributed load is applied across the top of the structure while the left edge of the structure is fixed. The normalized total reaction force is plotted as a function of the displacement for the different geometries. FIG. 20D shows the deformation of each geometry at the displacement provided at the end of the plot. This plot provides a measure of the normalized Von Misses stress of the structure.

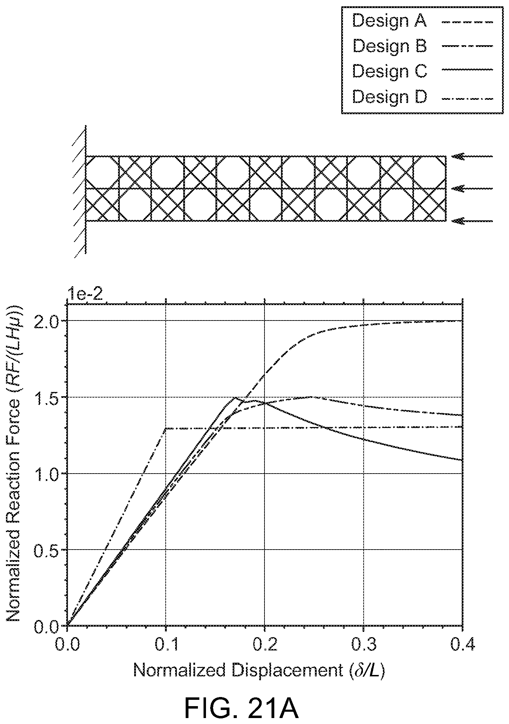

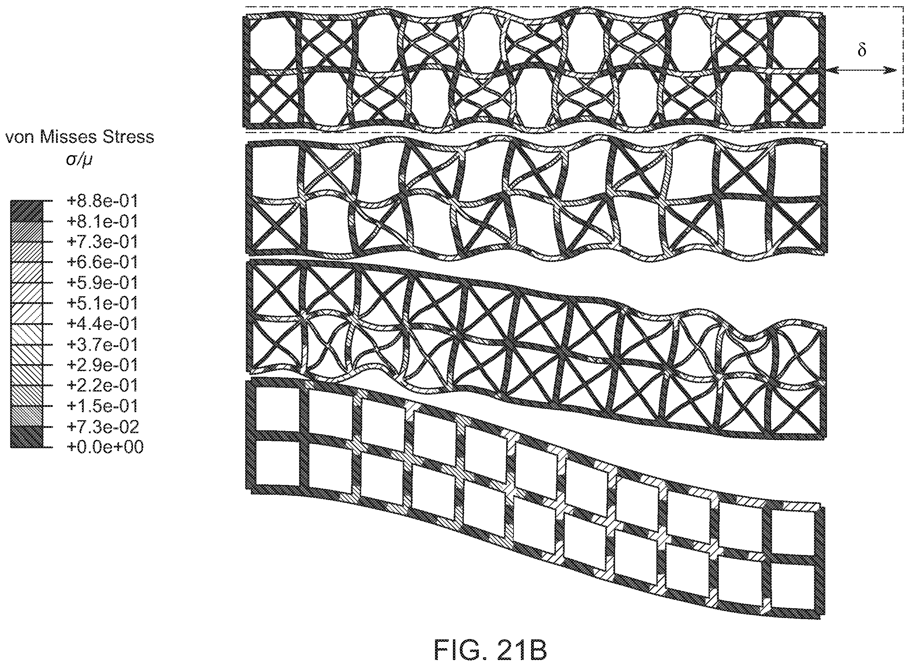

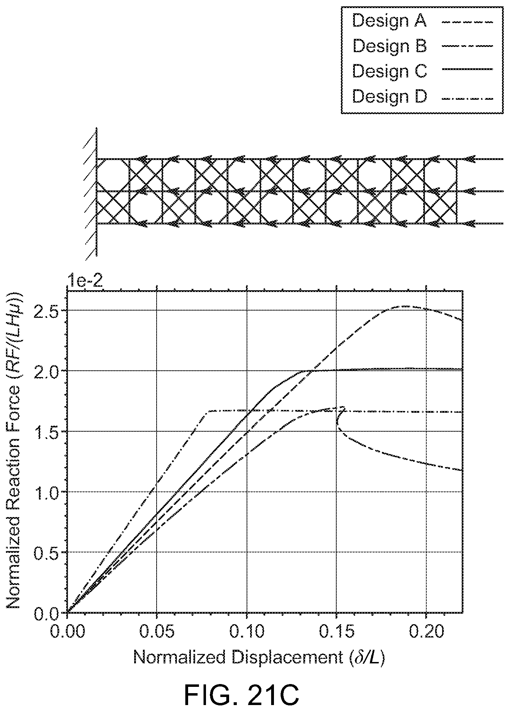

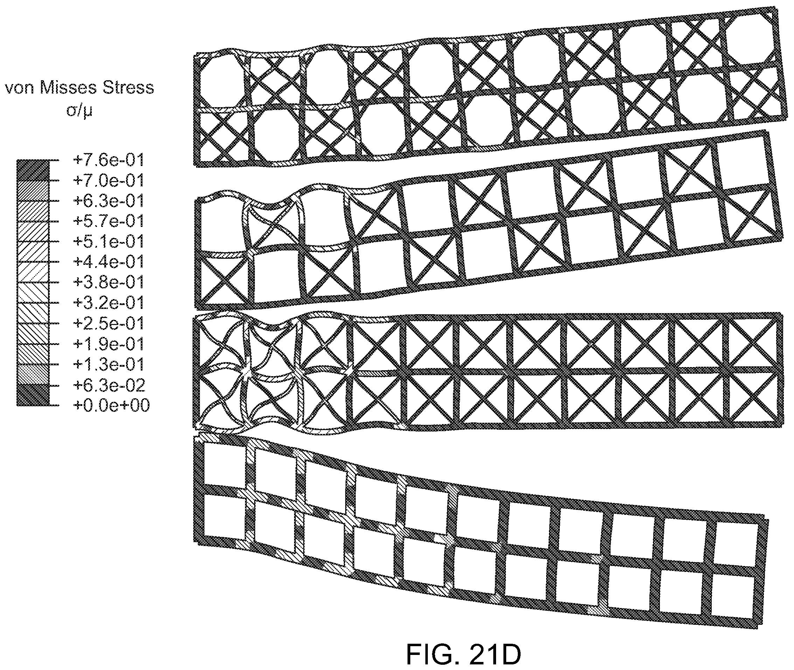

Referring to FIGs. 21A-21D, results illustrate a slender structure compression setting with finite element non-linear large scale simulations. For all cases presented FIGs. 21A-21D, consideration is made to a long realization of each design consisting of 11 cells (5.5 unit cells). FIG. 21A shows quantitative results for a simple slender structure compression test. In this case a displacement is applied to the right edge of the structure while the left edge of the structure is fixed. The normalized total reaction force is plotted as a function of the displacement for the different geometries. FIG. 21B shows the deformation of each geometry at the displacement provided at the end of the plot. The lines in this plot provide a measure of the normalized Von Misses stress of the structure. FIG. 21C shows quantitative results of a distributed load throughout every level of the structure. In this case a distributed load is applied across each level of the structure while the left edge of the structure is fixed. The normalized total reaction force is plotted as a function of the displacement for the different geometries. FIG. 21D shows the deformation of each geometry at the displacement provided at the end of the plot. The lines in this plot provide a measure of the normalized Von Misses stress of the structure.

### FURTHER OPTIMIZATION ASPECTS

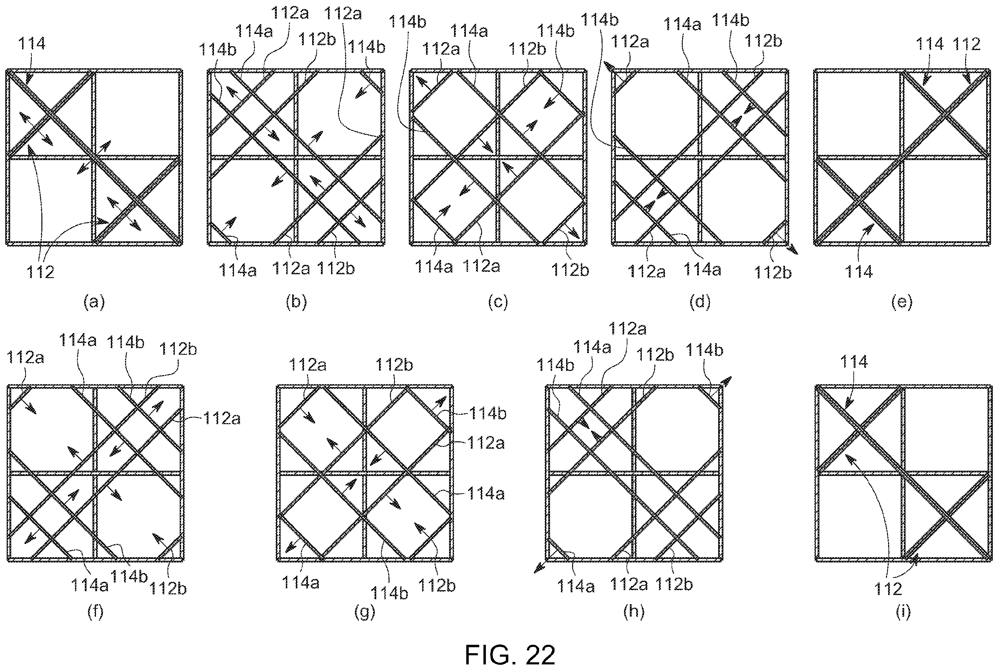

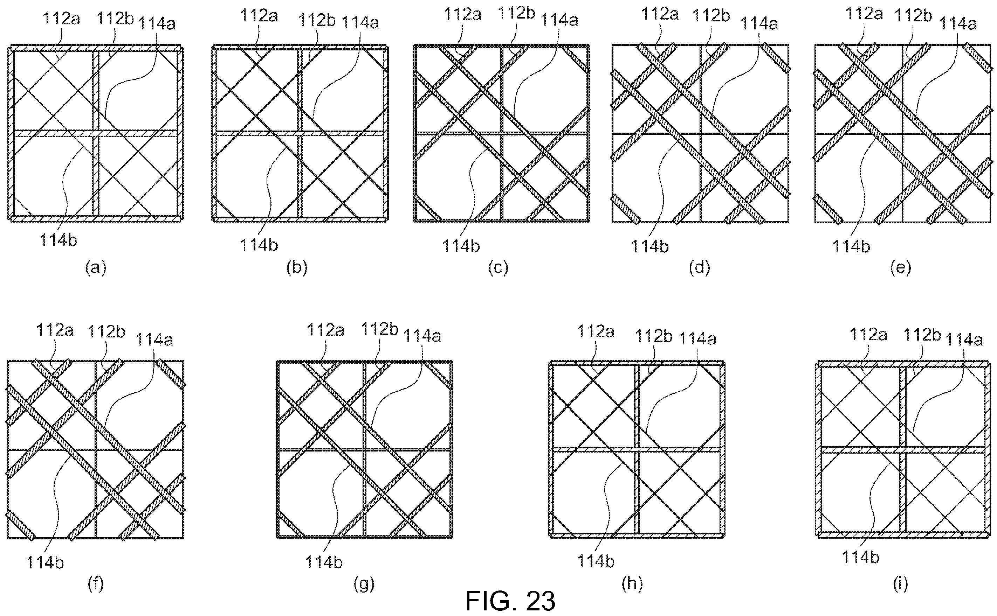

Referring to FIGs. 22A-22I and 23A-23I, results are illustrated based on an optimization algorithm that surveys multi-dimensional design space and that chooses which set of parameters creates the strongest design. The optimization algorithm decides where to place each set of diagonal lines and how much material should be allocated to the diagonal lines and to the non-diagonal lines.

In FIGs. 22A-22I, the optimization analysis moves sets of diagonal beams 112, 114 apart and then back together to show various exemplary design configurations. Specifically, respective beams 112a, 112b of two sets of first diagonal beams and respective beams 114a, 114b of two sets of second diagonal beams move away from each other to show various sizes of open spaces for a respective design configuration. The change in position of the beams is helpful in providing an optimal configuration for a desired application, as a function of at least strength and weight.

In FIGs. 23A-23I, instead of movement, each of a first pair of parallel beams 112a, 112b and a second pair of parallel beams has a varying thickness that progressively increases and then decreases. For brevity and clarity, reference numerals are only used in FIGs. 23A-23I for two of the respective pairs, but it is understood that other pairs also have a varying thickness, as illustrated. The change in thickness of the beams is helpful in providing an optimal configuration for a desired application, as a function of at least strength and weight.

The analysis provided by the optimization algorithm also increases the number of beams. The illustrated results show that by having two diagonals, the strongest practical structure is achieved. Therefore, using this type of design is helpful for engineers to sustainably construct taller buildings and longer bridges without having to use additional resources.

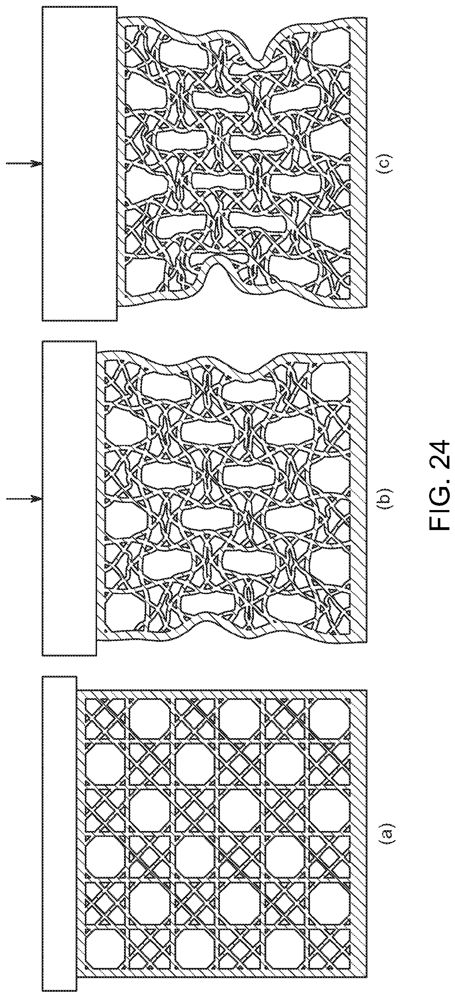

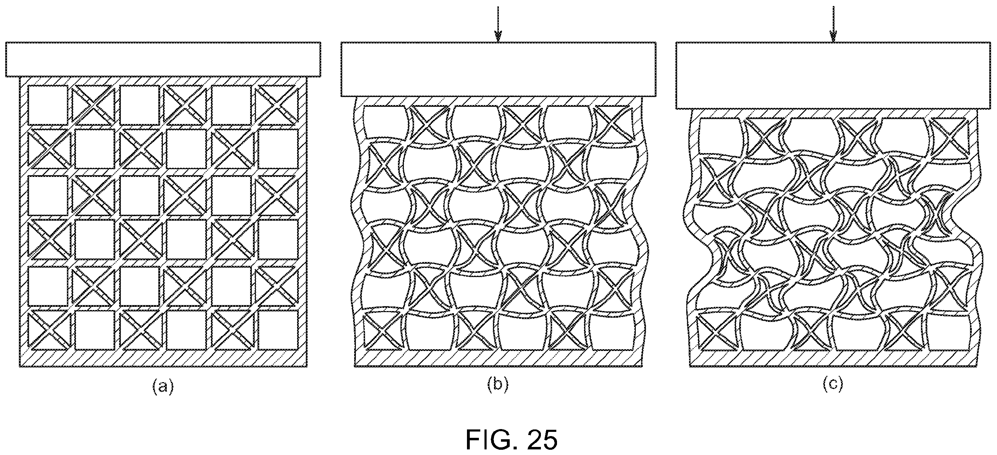

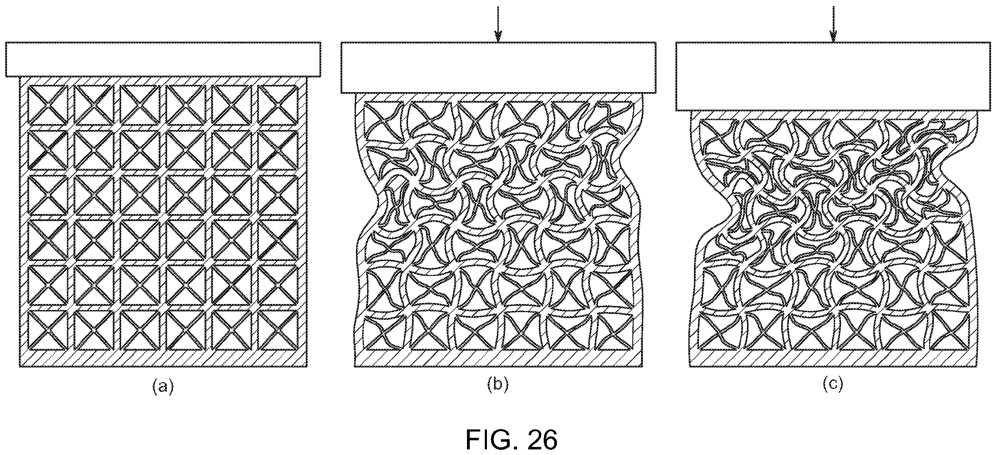

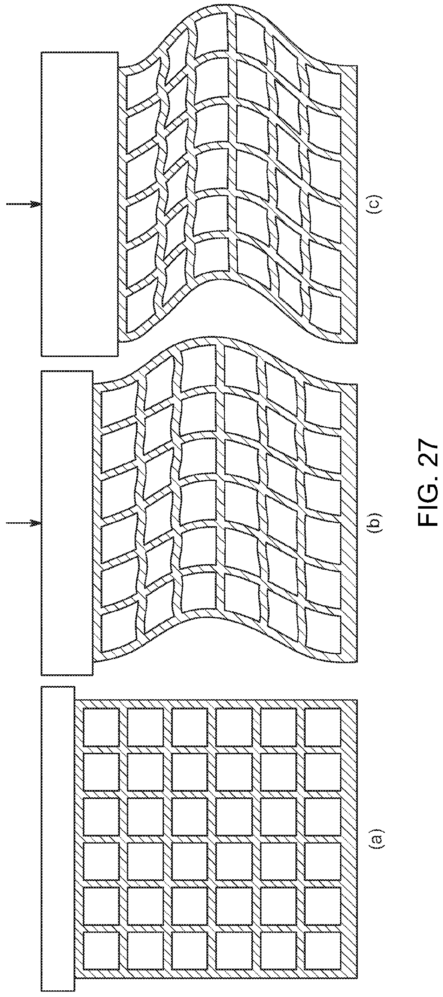

Referring to FIGs. 24A-24C, 25A-25C, 26A-26C, and 27A-27C, results from four different geometries are illustrated. Each of the geometries is constructed with a 3x3 network, and then extruded to form a finite size structure. Using rapid prototyping technology, such as three-dimensional (3D) printing and laser cutting, realistic and precise physical models are build resembling each of the geometries. After building the physical models, a mechanical compression device is placed on each physical model. As the physical models are compressed, the resulting deformation provide a way to measure the amount of weight that each structure can handle before failure.

## Claims

1. A structural lattice [100] comprising:
a rectangular base [102] defined by four periphery beams [104a-104d] and including two non-diagonal beams [106a, 106b] that divide the rectangular base [102] into four quadrants [108a-108d]; and
a diagonal reinforcement strut system overlaid on the rectangular base [102] and having at least two intersecting sets of diagonal beams [112, 114] forming an open-and-closed cell architecture, when viewed in a plane defined by the four periphery beams and the two nondiagonal beams forming the rectangular base;
**characterized in that**
one of the two intersecting sets of diagonal beams [112, 114] is a first set of diagonal beams [112a, 112b], the first set of diagonal beams [112a, 112b] including a first beam [112a] that is parallel to a second beam [112b];
wherein another one of the two intersecting sets of diagonal beams [112, 114] is a second set of diagonal beams [114a, 114b], the second set of diagonal beams [114a, 114b] including a respective first beam [114a] that is parallel to a respective second beam [114b];
wherein the respective first beam [114a] and the respective second beam [114b] are symmetrically positioned over one of the four quadrants [108a-108d]; and
wherein the first beam [112a] and the second beam [112b] of the first set of diagonal beams [112a, 112b] are symmetrically positioned over a same one of the four quadrants [108a-108d] as the respective first beam [114a] and the respective second beam [114b] of the second set of diagonal beams [114a, 114b].

2. The structural lattice [100] of claim 1, wherein the first set of diagonal beams [112a, 112b] intersects the second set of diagonal beams [114a, 114b] at a perpendicular angle.

3. The structural lattice [100] of claim 1, wherein the rectangular base [102] and the diagonal reinforcement strut system form a repeating sub-unit of at least a structural portion of a building, a bridge, an aerospace structure, an automotive structure, a crane, or a power transmission structure.

4. The structural lattice [100] of claim 1, wherein the diagonal reinforcement strut system is welded to the rectangular base [102].

5. The structural lattice [100] of claim 1, wherein the four periphery beams [104a-104d] have a square cross-section.

## Patentansprüche

1. Strukturgitter [100], umfassend:
eine rechteckige Basis [102], die durch vier periphere Balken [104a-104d] definiert ist und zwei Nicht-Diagonalbalken [106a, 106b] einschließt, die die rechteckige Basis [102] in vier Quadranten [108a-108d] teilen; und
ein diagonales Verstärkungsstrebensystem, das auf die rechteckige Basis [102] aufgelegt ist und mindestens zwei sich kreuzenden Sätze von Diagonalbalken [112, 114] aufweist, die eine offene und geschlossene Zellarchitektur bilden, wenn in einer Ebene betrachtet, die durch die vier peripheren Balken und die zwei Nicht-Diagonalbalken, die die rechteckige Basis bilden, definiert ist;
**dadurch gekennzeichnet, dass**
einer der zwei sich kreuzenden Sätze von Diagonalbalken [112, 114] ein erster Satz von Diagonalbalken [112a, 112b] ist, wobei der erste Satz von Diagonalbalken [112a, 112b] einen ersten Balken [112a] einschließt, der parallel zu einem zweiten Balken [112b] ist;
wobei ein anderer der zwei sich kreuzenden Sätze von Diagonalbalken [112, 114] ein zweiter Satz von Diagonalbalken [114a, 114b] ist, wobei der zweite Satz von Diagonalbalken [114a, 114b] einen jeweiligen ersten Balken [114a] einschließt, der parallel zu einem jeweiligen zweiten Balken [114b] ist;
wobei der jeweilige erste Balken [114a] und der jeweilige zweite Balken [114b] symmetrisch über einem der vier Quadranten [108a-108d] positioniert sind; und
wobei der erste Balken [112a] und der zweite Balken [112b] des ersten Satzes von Diagonalbalken [112a, 112b] symmetrisch über einem gleichen der vier Quadranten [108a-108d] positioniert sind wie der jeweilige erste Balken [114a] und der jeweilige zweite Balken [114b] des zweiten Satzes von Diagonalbalken [114a, 114b].

2. Strukturgitter [100] nach Anspruch 1, wobei der erste Satz von Diagonalbalken [112a, 112b] den zweiten Satz von Diagonalbalken [114a, 114b] in einem rechten Winkel schneidet.

3. Strukturgitter [100] nach Anspruch 1, wobei die rechteckige Basis [102] und das diagonale Verstärkungsstrebensystem eine sich wiederholende Untereinheit von mindestens einem Strukturabschnitt eines Gebäudes, einer Brücke, einer Luft- und Raumfahrtstruktur, einer Automobilstruktur, eines Krans oder einer Leistungsübertragungsstruktur bildet.

4. Strukturgitter [100] nach Anspruch 1, wobei das diagonale Verstärkungsstrebensystem an die rechteckige Basis [102] angeschweißt ist.

5. Strukturgitter [100] nach Anspruch 1, wobei die vier peripheren Balken [104a-104d] einen quadratischen Querschnitt aufweisen.

## Revendications

1. Treillis structurel [100] comprenant :
une base rectangulaire [102] définie par quatre poutres périphériques [104a-104d] et incluant deux poutres non diagonales [106a, 106b] qui divisent la base rectangulaire [102] en quatre quadrants [108a-108d] ; et
un système d'entretoise de renforcement diagonal superposé à la base rectangulaire [102] et présentant au moins deux ensembles d'intersection de poutres diagonales [112, 114] formant une architecture cellulaire ouverte et fermée, lorsqu'elle est vue dans un plan défini par les quatre poutres périphériques et les deux poutres non diagonales formant la base rectangulaire ;
**caractérisé en ce que**
l'un des deux ensembles d'intersection de poutres diagonales [112, 114] est un premier ensemble de poutres diagonales [112a, 112b], le premier ensemble de poutres diagonales [112a, 112b] incluant une première poutre [112a] qui est parallèle à une seconde poutre [112b] ;
dans lequel un autre des deux ensembles d'intersection de poutres diagonales [112, 114] est un second ensemble de poutres diagonales [114a, 114b], le second ensemble de poutres diagonales [114a, 114b] incluant une première poutre respective [114a] qui est parallèle à une seconde poutre respective [114b] ;
dans lequel la première poutre respective [114a] et la seconde poutre respective [114b] sont positionnées symétriquement sur l'un des quatre quadrants [108a-108d] ; et
dans lequel la première poutre [112a] et la seconde poutre [112b] du premier ensemble de poutres diagonales [112a, 112b] sont positionnées symétriquement sur le même des quatre quadrants [108a-108d] que la première poutre respective [114a] et la seconde poutre respective [114b] du second ensemble de poutres diagonales [114a, 114b].

2. Treillis structurel [100] selon la revendication 1, dans lequel le premier ensemble de poutres diagonales [112a, 112b] intersecte le second ensemble de poutres diagonales [114a, 114b] selon un angle perpendiculaire.

3. Treillis structurel [100] selon la revendication 1, dans lequel la base rectangulaire [102] et le système d'entretoise de renforcement diagonal forme une sous-unité répétitive d'au moins une partie structurelle d'un bâtiment, d'un pont, d'une structure aérospatiale, d'une structure automobile, d'une grue ou d'une structure de transmission de puissance.

4. Treillis structurel [100] selon la revendication 1, dans lequel le système d'entretoise de renforcement diagonal est soudé à la base rectangulaire [102].

5. Treillis structurel [100] selon la revendication 1, dans lequel les quatre poutres périphériques [104a-104d] présentent une section transversale carrée.
